# EUROPEAN PATENT APPLICATION

(11) **EP 1 172 955 A2**
(43) Date of publication of application: **16.01.2002**
(21) Application number: 01116345.8
(22) Date of filing: 05.07.2001
(51) Int. Cl.: H04J 3/16, H04B 10/207

(54) **Methods and devices of allocating slots to child stations**

(30) Priority: 14.07.2000 JP 2000214923; 11.01.2001 JP 2001003465; 21.02.2001 JP 2001045530
(71) Applicant: MITSUBISHI DENKI KABUSHIKI KAISHA, Tokyo 100-8310 (JP)
(72) Inventor: Akita, Minoru, Chiyoda-ku, Tokyo 100-8310 (JP); Asashiba, Yoshihiro, Chiyoda-ku, Tokyo 100-8310 (JP); Suzuki, Takamasa, Chiyoda-ku, Tokyo 100-8310 (JP)
(74) Representative: Bohnenberger, Johannes, Dr.

(57) **Abstract**

A slot allocation among child station devices is determined in a communication control device, and slot allocation information is sent as a downward signal to the child station devices. In each child station device, upwards packets are inserted into slots of an upward signal according to the slot allocation information, and the upward signal is sent from the child station devices to the communication control device. In the communication control device, it is checked whether or not upward packets exist in slots of the upward signal. Also, one child station device relating to slots of the upward signal currently received is identified according to a preset delay time for each child station device and a current time, the number of slots allowed for the identified child station device is detected according to the slot allocation information. In a traffic assuming unit, a traffic volume of upward packets sent from the identified child station device in the future is estimated according to the packet existence information and the number of allowed slots. Thereafter, the slot allocation information of the child station devices is changed according to the estimated traffic volumes of the child station devices. Accordingly, the traffic volume can be accurately estimated in a short time, and a transmission bandwidth of the upward signal can be properly allocated among the child station devices.

## Description

### BACKGROUND OF THE INVENTION

### Field of the Invention

The present invention relates to a communication control device such as an optical line terminator (OLT) functioning as a parent station device, a communication control method, a child station device (for example, an optical network terminator (ONT) or an optical network unit (ONU)) connected with the communication control device through both a transmission medium such as an optical fiber and a multiplexing-demultiplexing unit such as a star coupler, a communication system such as a passive optical network (PON) in which the plurality of child station devices connected with the parent station device share a transmission bandwidth, and a method of allocating slots of an upward signal, which is sent from the child station devices to the parent station device, among the child station devices.

### Description of Related Art

A communication system such as a passive optical network has been recommended as an international standard communication system, and the communication system has been widely used in conformity to recommendations. In the communication system such as a passive optical network (PON), to reduce the manufacturing cost of the communication system, a plurality of child station devices such as an optical network terminator (ONT) and an optical network unit (ONU) are connected with a communication control device such as an optical line terminator functioning as a parent station device through both a transmission medium and a multiplexing-demultiplexing unit, and the child station devices share a transmission bandwidth of the transmission medium.

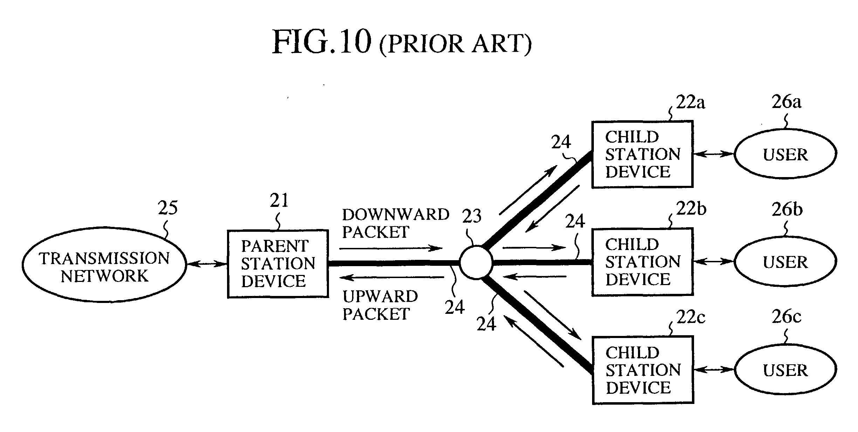

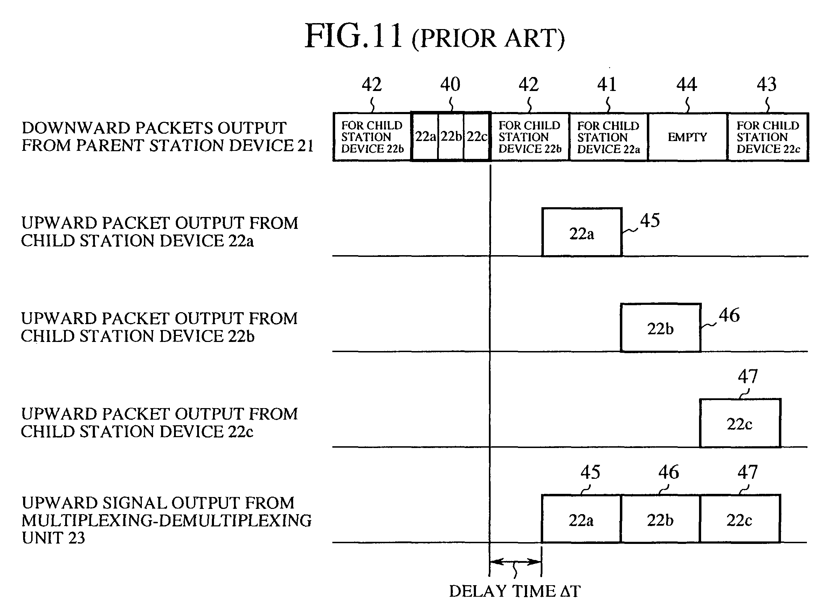

Fig. 10 is a view schematically showing the configuration of a conventional communication system in which a plurality of child station devices share a transmission bandwidth of a transmission medium. In Fig. 10, 21 indicates a parent station device connected with a transmission network 25. 22a, 22b and 22c indicate three child station devices respectively. 23 indicates a multiplexing-demultiplexing unit. 24 indicates a transmission medium. The child station devices 22a, 22b and 22c are connected with the parent station device 21 through the multiplexing-demultiplexing unit 23 and the transmission medium 24. Also, a plurality of users 26a, 26b and 26c use the child station devices 22a, 22b and 22c respectively.
Next, an operation of the conventional communication system is described with reference to Fig. 11.

Fig. 11 is a timing chart of downward packets sent from the parent station device 21 to the child station devices 22a to 22c and upward packets sent from the child station devices 22a to 22c to the parent station device 21. In Fig. 11, 40 indicates a packet in which an instruction indicating an output permission of upward packets is arranged for each child station device. That is, each child station device receiving the instruction is allowed to output upward packets to the parent station device 21. For example, slot allocation information indicating the number of slots and positions of the slots is arranged in the packet 40 for each child station device, and each child station device is allowed to insert upward packets into the slots of the upward signal. 41 indicates a downward packet for the child station device 22a, 42 indicates a downward packet for the child station device 22b, 43 indicates a downward packet for the child station device 22c, and 44 indicates an empty packet. Also, 45 indicates an upward packet sent from the child station device 22a, 46 indicates an upward packet sent from the child station device 22b, and 47 indicates an upward packet sent from the child station device 22c. A delay time from the transmission of the packet 40 to the insertion of upward packets performed by the child station devices 22a to 22c is indicated by ΔT. The upward packet sent from each child station device is placed at a slot of an upward signal indicated by the slot allocation information of the downward packet 40.

The transmission of downward packets output from the parent station device 21 is described.

The downward packets 41, 42 and 43, to which addresses of the child station devices 22a to 22c are attached, are multiplexed by time sharing, and these downward packets of a downward signal are simultaneously sent to the child station devices 22a to 22c. In each child station device, the addresses attached to the downward packets 41 to 43 are checked. In cases where a downward packet checked by one child station device is directed to the child station device, the packet is received in the child station device. In contrast, in cases where a packet checked by one child station device is not directed to the child station device, the packet is discarded in the child station device. Also, in cases where there is no packet to be sent from the parent station device 21 to the child station devices 22a to 22c, the empty packets 44 is inserted into a downward signal.

Also, the downward packet 40 of the slot allocation information is inserted periodically or non-periodically in the downward signal and is simultaneously sent to the child station devices 22a to 22c to inform the child station devices 22a to 22c that each child station device is allowed to insert upward packets into slots of an upward signal. The downward packet 40 is taken in each child station device, and the child station device recognizes the number of slots and a position of each slot to which the child station device is allowed to insert an upward packet.

Next, the transmission of upward packets output from the child station devices 22a to 22c is described.

When the downward packet 40 is simultaneously sent to the child station devices 22a to 22c, each child station device recognizes the number of slots and a position of each slot to which the child station device is allowed to insert an upward packet. For example, each child station device is allowed to insert an upward packet into a slot of an upward signal, and an upward packet 45 of the child station device 22a, an upward packet 46 of the child station device 22b and an upward packet 47 of the child station device 22c inserted into the upward signal are sent to the parent station device 21 in that order.

After the passage of a delay time agreed by the parent station device 21 from the reception of the downward packet 40 in the child station devices 22a to 22c, each child station device inserts an upward packet into a slot allowed by the parent station device 21. For example, when a prescribed delay time ΔT passes after the reception of the packet 40 having the slot allocation information in the child station devices 22a to 22c, the child station device 22a inserts an upward packet 45 into a first slot, the child station device 22b inserts an upward packet 46 into a second slot next to the first slot, and the child station device 22c inserts an upward packet 47 into a third slot next to the second slot.

Thereafter, the upward packets 45, 46 and 47 are multiplexed to an upward signal in the multiplexing-demultiplexing unit 4, and the upward signal of the upward packets 45, 46 and 47 is sent to the parent station device 21.

As is described above, in the conventional communication system, in cases where the child station devices 22a to 22c share an upward transmission bandwidth (or a transmission bandwidth of upward packets) of a single transmission medium, it is necessary that the parent station device 21 guarantees a minimum transmission bandwidth to each user of the child station devices 22a to 22c according to a contract with the user. In addition, in cases where there is a user who outputs upward packets at a high traffic volume at a burst, it is necessary that a surplus transmission bandwidth denoting a difference between the whole transmission bandwidth of the transmission medium 24 and a sum of the minimum transmission bandwidths of the users 26a to 26c is dynamically shared among the users 26a to 26c. Therefore, a surplus network source of the upward transmission bandwidth (that is, the transmission bandwidth of the upward packets) of the transmission medium 24 can be adaptively used. Also, in cases where the surplus transmission bandwidth of the upward transmission bandwidth is temporarily and dynamically shared among the users 26a to 26c, the congestion in the transmission medium 24 can be prevented.

To dynamically allocate the upward transmission bandwidth to each user, a method of detecting a traffic volume of upward packets in each child station device is known. Also, another method of detecting a traffic volume of upward packets in the parent station device is known.

In the method of detecting a traffic volume of upward packets in each child station device, information of the upward transmission bandwidth required of each child station device, information of the number of upward packets stored in a buffer of each child station device and information of a changing characteristic of a traffic volume of upward packets in each child station device are sent from the child station device to the parent station device 21.

In the method of detecting a traffic volume of upward packets in the parent station device 21, a traffic volume of upward packets in each child station device is always measured in the parent station device 21, and an upward transmission bandwidth allocated to a child station device is increased by the parent station device 21 in cases where the traffic volume of upward packets sent from the child station device is high.

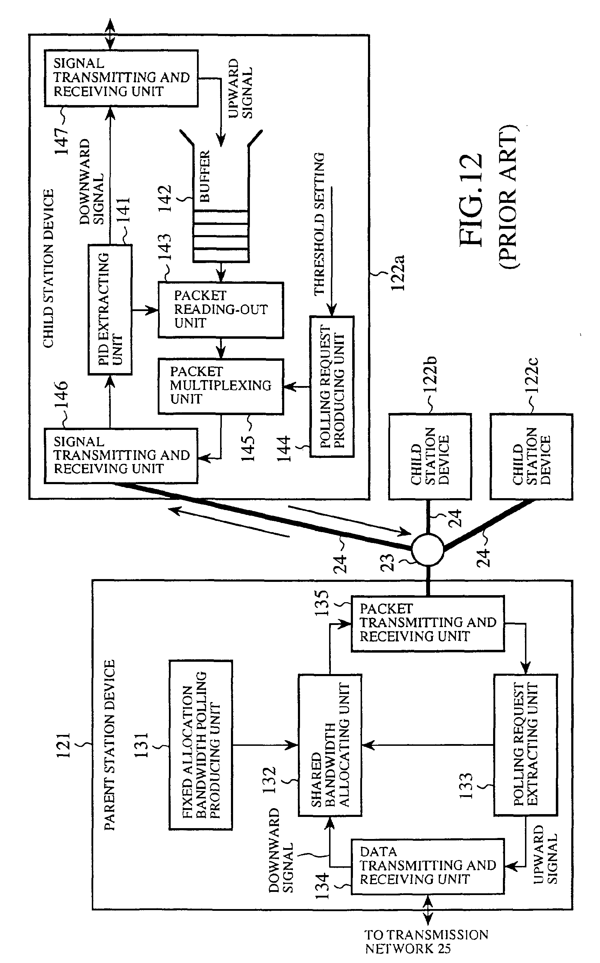

As to the method of detecting a traffic volume of upward packets in each child station device, a communication system is, for example, disclosed in a literature "ATM-PON Dynamic Transmission Bandwidth Allocation Method" (written by MIYABE et al. General Meeting B-8-53 of the Institute of Electronics, Information and Communication Engineers, 1997) and is shown in Fig. 12.

Fig. 12 is a block diagram of a conventional communication system operated according to the method of detecting a traffic volume of upward packets of each child station device in the child station device. In Fig. 12, 121 indicates a parent station device using a conventional communication control device. 122a, 122b and 122c indicate child station devices. The child station devices 122a to 122c are connected with the parent station device 121 through the multiplexing-demultiplexing unit 23 and the transmission medium 24.

In the parent station device 121, 131 indicates a fixed allocation bandwidth polling producing unit for setting a fixed transmission bandwidth allowed to be used in the child station devices 122a to 122c. 132 indicates a shared bandwidth allocating unit for sending allocation information to the child station devices 122a to 122c. 133 indicates a polling request extracting unit for extracting a polling request from an upward signal. 134 indicates a data transmitting and receiving unit for transmitting and receiving data to/from a transmission network. 135 indicates a signal transmitting and receiving unit for transmitting a downward signal and receiving an upward signal.

In each of the child station devices 122a to 122c, 141 indicates a PID extracting unit for extracting a packet sending-out permission from a downward signal. 142 indicates a buffer for storing upward packets of an upward signal. 143 indicates a packet reading-out unit for reading out the upward packets from the buffer 142. 144 indicates a polling request producing unit for producing a polling request. 145 indicates a packet multiplexing unit for multiplexing the upward packets read out in the packet reading-out unit 143 and the polling request to produce an upward signal. 146 indicates a signal transmitting and receiving unit for transmitting the upward signal and receiving a downward signal. 147 indicates a signal transmitting and receiving unit for transmitting a downward signal and receiving an upward signal. Here, the buffer 142 is arranged for each of two classes in the literature "ATM-PON Dynamic Transmission Bandwidth Allocation Method". However, because a principal configuration and operation of the conventional communication system is described in this specification, one buffer 142 is shown in Fig. 12 for convenience.

Next, an operation of the conventional communication system is described.

In each of the child station devices 122a to 122c, a threshold value corresponding to a capacity of the buffer 142 is preset in the polling request producing unit 144.

In the parent station device 121, a fixed transmission bandwidth allowed to be used in the child station devices 122a to 122c is set in the fixed allocation bandwidth polling producing unit 131, a transmission bandwidth of upward packets of an upward signal is allocated among the child station devices 122a to 122c in the shared bandwidth allocating unit 132, packet sending-out permissions for the child station devices 122a to 122c and allocation information indicating the transmission bandwidths of the child station devices 122a to 122c are arranged in a downward packet, the downward packet is inserted into a downward signal, and the downward signal is sent to the child station devices 122a to 122c.

In each of the child station devices 122a to 122c, the packet sending-out permission for the child station device is extracted from the downward signal in the PID extracting unit 141. In cases where the packet sending-out permission for the child station device is detected, the PID extracting unit 141 controls the packet reading-out unit 143 to read out upward packets stored in the buffer 142 to the packet multiplexing unit 145. Also, in the polling request producing unit 144 of the child station device, in cases where the number of upward packets stored in the buffer 142 exceeds the preset threshold value, a polling request is produced and is sent to the packet multiplexing unit 145. In the packet multiplexing unit 145, the upward packets and the polling request are multiplexed to an upward signal, and the upward signal is sent out to the parent station device 121 through the signal transmitting and receiving unit 146. The upward signals sent from the child station devices 122a to 122c is multiplexed in the multiplexing and demultiplexing unit 23 to an upward signal.

In the parent station device 121, when the upward signal is received in the signal transmitting and receiving unit 135, the polling request produced in a specific child station device is extracted from the upward signal in the polling request extracting unit 133, and the polling request is sent to the shared bandwidth allocating unit 132. When the polling request is received in the shared bandwidth allocating unit 132, the transmission bandwidth of upward packets is again allocated to the specific child station device so as to increase the transmission bandwidth allocated to the specific child station device.

As is described above, in the conventional communication system, it is judged in each child station device whether or not a volume of the upward packets stored in the buffer 142 exceeds a prescribed threshold value. In cases where the volume of the upward packets exceeds a prescribed threshold value in a specific child station device, a polling request is sent from the specific child station device to the parent station device 121. In cases where the parent station device 121 receives the polling request of the specific child station device, the transmission bandwidth allocated to the specific child station device is changed.

However, in the conventional communication system, it is required of each child station device to arrange a means for detecting an excess of stored upward packets and to send excess information to the parent station device 121. Therefore, the configuration of each child station device is complicated, and a manufacturing cost of each child station device is increased. In particular, in cases where the number of child station devices is increased, these problems becomes worse.

Also, in the conventional communication system, in cases where child station device has a plurality of buffers, a packet reading-out method in each child station device usually differs from that in the other child station devices. Therefore, even though upward signals having the same traffic characteristic are allowed to the child station devices, there is a probability that a timing of sending the packet excess information from each child station device differs from that in the other child station devices. In this case, there is a probability that the transmission bandwidth of the upward packets is not appropriately allocated among the child station devices 122a to 122c. To prevent this problem, there is a case where a packet reading-out method is used in the child station devices 122a to 122c in common. However, because only a specific type of child station devices can be connected with the conventional communication system, the conventional communication system cannot be widely used.

Also, in the conventional communication system, when the packet excess information is sent to the parent station device 121, there is a probability that the packet excess information of each child station device is competed with upward signals and/or the packet excess information of the other child station devices. In this case, there is a probability that the sending of the packet excess information is delayed, or the packet excess information is discarded in the worst case.

To solve the above problems due to the sending of the packet excess information from each child station device to the parent station device 121, there is a case where no packet excess information is sent from each child station device to the parent station device. In this case, an upward signal sent from each child station device is measured in the parent station device, a traffic volume of upward packets of the upward signal of each child station device is grasped in the parent station device, and a transmission bandwidth given to each child station device is adjusted according to the traffic volume in the child station device.

However, because the conventional communication system has the configuration shown in Fig. 12, in cases where no packet excess information is sent from each child station device to the parent station device 121, it is required to measure upward packets sent from each child station device in the parent station device, to grasp a traffic volume of the upward packets of each child station device in the parent station device and to adjust a transmission bandwidth of the upward packets given to each child station device according to the traffic volume in the child station device. Therefore, it is difficult to accurately grasp a traffic volume of the upward packets of each child station device even though the traffic volume of the upward packets is measured in a short time. Therefore, there is a probability that a surplus transmission bandwidth in the upward packets cannot be properly shared among the child station devices 122a to 122c.

Also, in cases where a traffic volume of the upward packets of each child station device is measured for a long time, the traffic volume of the upward packets of each child station device can be accurately grasped in the parent station device 121. However, it is difficult to share a surplus transmission bandwidth among the child station devices 122a to 122c according to a change of the traffic occurring in a short time.

Next, another conventional communication system is described.

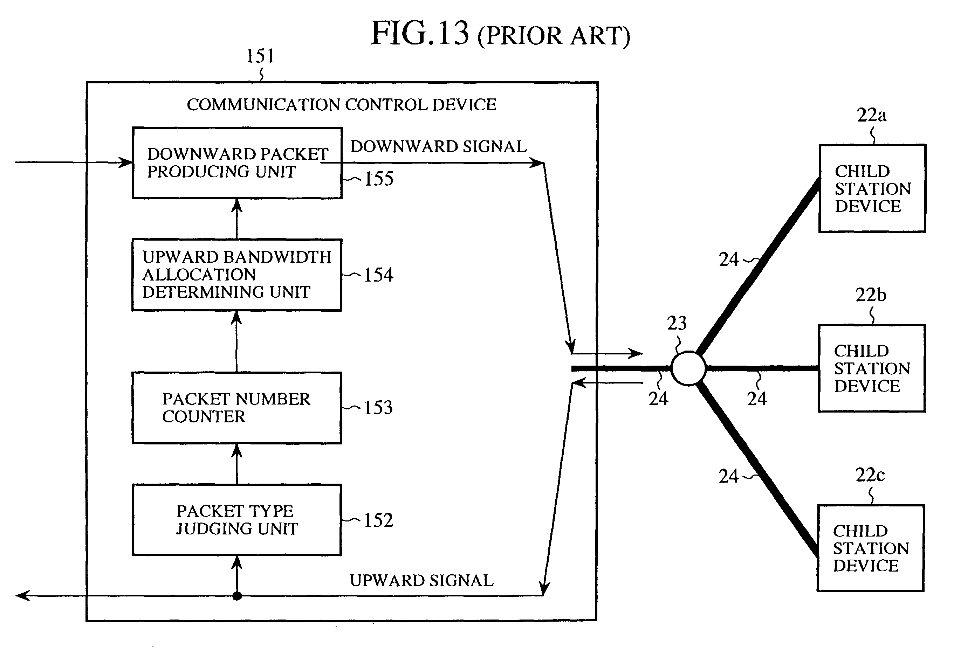

Fig. 13 is a block diagram of a conventional communication system operated according to a method of detecting a traffic volume of information packets of each child station device in a communication control device.

In this conventional communication system, a traffic volume of upward packets in an upward signal sent from child station devices is always monitored, and an upward transmission bandwidth (or a transmission bandwidth for upward packets) allocated to a child station device is increased as a traffic volume of upward packets sent from the child station device is increased. In Fig. 13, 151 indicates a conventional communication control device functioning as a parent station device. 22a to 22b indicate the child station devices connected with the parent station device 121 through the multiplexing-demultiplexing unit 23 and the transmission medium 24. In the conventional communication control device 151, 152 indicates a packet type judging unit for judging whether or not each upward packet included in an upward signal is an empty packet. 153 indicates a packet number counter for counting the number of empty packets or the number of information packets other than empty packets. 154 indicates an upward bandwidth allocation determining unit for determining an upward transmission bandwidth to be allocated to each child station device according to the number of information packets other than empty packets. 155 indicates a downward packet producing unit for producing an instruction of an output permission of upward packets corresponding to the upward transmission bandwidth for each child station device and producing a downward packet including the instructions for all child station devices 22a to 22c.

In the conventional communication control device 151, an upward transmission bandwidth to be allocated to each child station device is determined in the upward bandwidth allocation determining unit 154 and is sent to the downward packet producing unit 155. In the downward packet producing unit 155, an instruction of an output permission of upward packets corresponding to the upward transmission bandwidth is produced for each child station device, and the instructions for all child station devices 22a to 22c are inserted into an information packet. The information packet is sent to the child station devices 22a to 22c as a downward signal.

In each child station device, the instruction for the child station device is extracted from the downward signal. In the instruction, the number of slots and positions of the slots in an upward signal are indicated. The child station device is allowed to insert upward packets into the slots. Therefore, the child station device recognizes the number of slots and positions of the slots indicated by the instruction. In cases where the child station device has information to be sent out to the conventional communication control device 151, the information is arranged in information packets, the information packets are inserted into slots indicated by the instruction, and the information packets are sent to the conventional communication control device 151 as upward packets. Also, in cases where the child station device has no information, empty packets (or no packets) are sent to the conventional communication control device 151 as upward packets.

In the conventional communication control device 151, an upward signal including the upward packets sent from all child station devices 22a to 22c is received, it is judged in the packet type judging unit 152 whether or not each packet included in the upward signal is an empty packet, and information indicating the packet type (information packet or empty packet) of each upward packet is sent to the packet number counter 153.

In the packet number counter 153, the number of empty packets or the number of information packets is counted for each child station device, and information indicating the number of empty packets or the number of information packets is sent to the upward bandwidth allocation determining unit 154.

In the upward bandwidth allocation determining unit 154, an upward transmission bandwidth to be allocated to each child station device is determined according to the information indicating the number of empty packets or the number of information packets. That is, a large upward transmission bandwidth is allocated to one child station device in cases where the number of information packets sent from the child station device is large or the number of empty packets sent from the child station device is small. In contrast, a small upward transmission bandwidth is allocated to one child station device in cases where the number of information packets sent from the child station device is small or the number of empty packets sent from the child station device is large. The upward transmission bandwidth determined for each child station device is transformed into an instruction indicating an output permission of upward packets, and the instruction is sent to the downward packet producing unit 155.

In the downward packet producing unit 155, a downward packet including the instructions for all child station devices 22a to 22c is produced and is inserted into a downward signal. The operation of the conventional communication control device 151 and the operation of each child station device are repeatedly performed.

As is described above, in the conventional communication system shown in Fig. 13, because the number of information packets or the number of empty packets is counted in the packet number counter 153 for each child station device, a specific child station device, which requires of an upward transmission bandwidth larger than that already allocated to the specific child station device, can be specified, and the upward transmission bandwidth required by the specific child station device can be allocated to the specific child station device.

However, in the conventional communication system shown in Fig. 13, in cases where an upward transmission bandwidth (that is, a sum of a partial surplus transmission bandwidth and a minimum transmission bandwidth determined by a contract) is allocated to each child station device, the number of empty packets or the number of information packets other than empty packets sent from each child station device is referred, an upward transmission bandwidth allocated to a child station device is increased in cases where the number of information packets sent from the child station device is high, and an upward transmission bandwidth allocated to a child station device is decreased in cases where the number of information packets sent from the child station device is low. In this case, because the number of information packets output from a child station device is changed according to a characteristic change in a traffic volume of information packets, there is a case where it is difficult to correctly estimate the number of information packets output from a child station device in the future. Therefore, a problem has arisen that an upward transmission bandwidth cannot be properly allocated to each child station device.

For example, the number of information packets planned to be output from a child station device is considerably increased in a first time period, and the number of information packets planned to be output from the child station device is considerably decreased in a second time period following the first time period. That is, a traffic volume of information packets output from the child station device is changed at a burst. In this case, because the number of information packets received in the communication control device 151 is considerably increased in the first time period, an upward transmission bandwidth considerably increased is allocated to the child station device at a time just after the first time period in the upward bandwidth allocation determining unit 154. Thereafter, though the upward transmission bandwidth considerably increased is allocated to the child station device in the second time period, the number of information packets output from the child station device is considerably decreased in the second time period. Therefore, many empty packets are added to the upward packets to produce an upward signal in the child station device in the second time period, and the upward signal including many empty packets is received in the communication control device 151 in the second time period. Therefore, an upward transmission bandwidth considerably decreased is allocated to the child station device at a time just after the second time period. Thereafter, in cases where the number of information packets planned to be output from the child station device is considerably increased in a third time period following the second time period, because the upward transmission bandwidth considerably decreased is allocated to the child station device, it is impossible to send all information packets planned to be output from the child station device to the communication control device 151, and a part of the formation packets are sent to the communication control device 151. In the communication control device 151, though the number of upward packets (that is, a sum of information packets and empty packets) received in the third time period is lower than the number of upward packets received in the first time period, because the number of information packets received in the third time period is considerably larger than the number of empty packets received in the third time period, an upward transmission bandwidth allocated to the child station device is considerably increased at a time just after the third time period. Thereafter, this operation is repeatedly performed.

As is described in the operation example, in cases where a traffic volume of information packets output from a child station device is changed at a burst and a burst change frequency almost agrees with a frequency of the change of an upward transmission bandwidth of the child station device determined in the packet number counter 153 and the upward bandwidth allocation determining unit 154, an upward transmission bandwidth allocated to the child station device for the sending of information packets in a time period is undesirably lowered when the number of information packets planned to be output from the child station device is high in the time period, and an upward transmission bandwidth allocated to the child station device for the sending of information packets in a time period is undesirably heightened when the number of information packets planned to be output from the child station device is low in the time period. Therefore, the upward transmission bandwidth is not efficiently allocated to the child station device.

Also, in cases where a traffic volume of information packets sent from each child station device is always checked in the communication control device 151 to allocate an upward transmission bandwidth set to a high value to a child station device from which many information packets are sent to the communication control device 151, it is required of a communication system to determine an upward transmission bandwidth of the child station device in the future according to the number of information packets currently sent from the child station device to the communication control device 151.

For example, there is a case where a traffic volume of information packets output from a child station device is changed according to a monotone increasing (or decreasing) characteristic of the traffic volume in the conventional communication system shown in Fig. 13. In this case, to determine an upward transmission bandwidth required by the child station device in a next time period according to the number of information packets sent from the child station device to the communication control device 151 in a current time period, an upward transmission bandwidth allocated to the child station device for the next time period is set to that corresponding to the number of information packets counted in the packet number counter 153 in the current time period. Therefore, in cases where a traffic volume of information packets output from the child station device is changed according to a monotone increasing characteristic, an upward transmission bandwidth allocated to the child station device in the upward bandwidth allocation determining unit 154 is always insufficient to send all information packets to be output from the child station device. In contrast, in cases where a traffic volume of information packets output from the child station device is changed according to a monotone decreasing characteristic, an upward transmission bandwidth allocated to the child station device is always excessive. Therefore, the upward transmission bandwidth is not effectively allocated to the child station device.

As is described above, in the conventional communication system shown in Fig. 13, because the number of information packets output from each child station device is changed according to a characteristic change (or a time-wise change) in a traffic volume of information packets, a problem has arisen that an upward transmission bandwidth cannot be properly allocated to each child station device.

Next, a communication system in which an operation and maintenance packet is, for example, used in asynchronous transfer mode (ATM) communication method, is described.

As is described above, even though the upward transmission bandwidth is dynamically allocated among a plurality of child station devices, it is required that an operation and maintenance packet is reliably sent to a parent station device (or a communication control device) without any delay so as to quickly inform the parent station device of a failure occurring in either a child station device or a transmission line of an ATM communication system. Therefore, the operation and maintenance packet takes priority of the upward packets.

In particular, in the method of detecting a traffic volume of upward packets of each child station device in the child station device, it is required that a packet including information of a traffic volume of upward packets of each child station device is reliably sent to the parent station device without any delay.

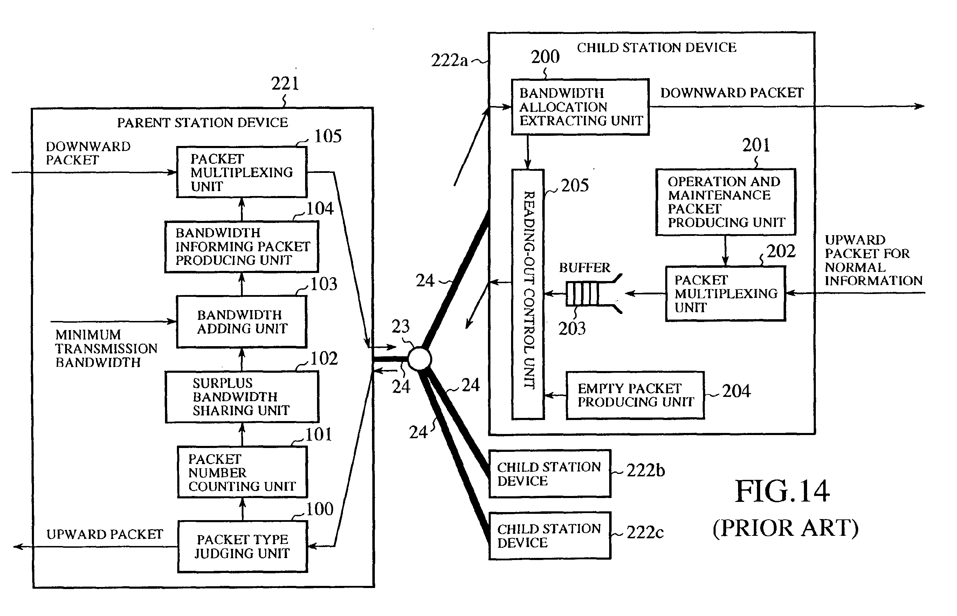

Fig. 14 is a block diagram of a conventional communication system operated according to a method of detecting a traffic volume of upward packets of each child station device in a parent station device.

In Fig. 14, 221 indicates a parent station device. 222a to 222c indicate a plurality of child station devices. The child station devices 222a to 222c are connected with the parent station device 221 through the multiplexing-demultiplexing unit 23 and the transmission medium 24.

In the parent station device 221, 100 indicates a packet type judging unit for judging whether or not each upward packet included in an upward signal is an empty packet. 101 indicates a packet number counting unit for counting the number of empty packets or the number of information packets other than empty packets. 102 indicates a surplus bandwidth sharing unit for sharing a surplus transmission bandwidth among the child station devices 222a to 222c to give a partial surplus transmission bandwidth to each child station device. 103 indicates a bandwidth adding unit for adding the partial surplus transmission bandwidth given to each child station device to a minimum transmission bandwidth of the child station device to calculate an upward transmission bandwidth allocated to each child station device. 104 indicates a bandwidth informing packet producing unit for producing a bandwidth informing packet which includes information of the upward transmission bandwidths allocated to the child station devices 222a to 222c. 105 indicates a packet multiplexing unit for multiplexing the bandwidth informing packet with downward packets to produce a downward signal.

In each of the child station devices 222a to 222c, 200 indicates a bandwidth allocation extracting unit for extracting information of the upward transmission bandwidth allocated to the child station device from the bandwidth informing packet. 201 indicates an operation and maintenance packet producing unit for producing an operation and maintenance packet in which alarm information is arranged. 202 indicates a packet multiplexing unit for multiplexing the operation and maintenance packet with upward packets of normal information. 203 indicates a buffer for storing the operation and maintenance packet and the upward packets multiplexed with each other. 204 indicates an empty packet producing unit for producing empty packets. 205 indicates a reading-out control unit for reading out the operation and maintenance packet and the upward packets stored in the buffer 203 at an upward packet output time corresponding to the upward transmission bandwidth of the child station device which is extracted in the bandwidth allocation extracting unit 200.

Next an operation of the conventional communication system shown in Fig. 14 is described.

In the parent station device 221, a surplus transmission bandwidth is calculated in the surplus bandwidth sharing unit 102 by subtracting a sum of a plurality of minimum transmission bandwidths of the child station devices 222a to 222c from the whole transmission bandwidth of the transmission medium 24. The minimum transmission bandwidth of each child station device is determined by a contract of the parent station device 221 with the child station device. In a start operation of the conventional communication system, in the surplus bandwidth sharing unit 102, the surplus transmission bandwidth is equally shared among the child station devices 222a to 222c or is shared among the child station devices 222a to 222c in proportional to the minimum transmission bandwidth of each child station device. Thereafter, in the bandwidth adding unit 103, the minimum transmission bandwidth of each child station device is added to a partial surplus transmission bandwidth allocated to the child station device to calculate an upward transmission bandwidth allocated to the child station device. In the bandwidth informing packet producing unit 104, a bandwidth informing packet is produced. In the bandwidth informing packet, information of the upward transmission bandwidths allocated to the child station devices 222a to 222c is arranged. Thereafter, in the packet multiplexing unit 105, the bandwidth informing packet is multiplexed with downward packets. A downward signal having the bandwidth informing packet and the downward packets is delivered to the child station devices 222a to 222c through the multiplexing-demultiplexing unit 23 and the transmission medium 24.

In each of the child station devices 222a to 222c, when the downward signal is sent to the child station device, it is checked whether or not each downward packet is directed to the child station device, and downward packets directed to the child station device and the bandwidth informing packet are received in the child station device. Thereafter, in the bandwidth allocation extracting unit 200, the bandwidth informing packet is recognized, and information of the upward transmission bandwidth allocated to the child station device is extracted from the bandwidth informing packet.

Also, in the operation and maintenance packet producing unit 201, an operation and maintenance packet is produced. In the operation and maintenance packet, alarm information is arranged. Thereafter, in the packet multiplexing unit 202, the operation and maintenance packet is multiplexed with upward packets. In each upward packet, normal information is arranged. Thereafter, the operation and maintenance packet and the upward packets multiplexed with each other are stored in the buffer 203 to delay an output timing of an upward signal including the operation and maintenance packet and the upward packets. That is, a data transfer rate of the upward signal is set to the upward transmission bandwidth of the child station device extracted in the bandwidth allocation extracting unit 200.

In the reading-out control unit 205, the operation and maintenance packet and the upward packets stored in the buffer 203 are read out at a read-out time corresponding to the upward transmission bandwidth of the child station device extracted in the bandwidth allocation extracting unit 200, and the upward signal including the operation and maintenance packet and the upward packets is sent to the parent station device 221. In cases where the number of information packets (that is, the operation and maintenance packet and the upward packets of the normal information) stored in the buffer 203 is low at the read-out time as compared with the upward transmission bandwidth, empty packets are produced in the empty packet producing unit 204, and upward packets denoting the information packets and the empty packets are sent to the parent station device 221 as an upward signal so as to satisfy the upward transmission bandwidth. The upward signals sent from the child station devices 222a to 222c are multiplexed in the multiplexing-demultiplexing unit 23 to an upward signal.

In the parent station device 221, when the upward signal is received from the child station devices 222a to 222c, it is judged in the packet type judging unit 100 whether or not each upward packet included in the upward signal is an empty packet. This judgment is performed for each child station device. Thereafter, in the packet number counting unit 101, the number of empty packets or the number of information packets other than empty packets is counted. Thereafter, in the surplus bandwidth sharing unit 102, a surplus transmission bandwidth is calculated by subtracting a sum of the minimum transmission bandwidths of the child station devices 222a to 222c from the whole transmission bandwidth of the transmission medium 24, and the surplus transmission bandwidth is shared among the child station devices 222a to 222c according to the number of information packets counted in the packet number counting unit 101. That is, a partial surplus transmission bandwidth given to each child station device is proportional to the number of information packets of the child station device.

As is described above, in the conventional communication system shown in Fig. 14, when a partial surplus transmission bandwidth is given to each child station device in the parent station device 221, the operation and maintenance packet has the same priority as the upward packets. However, the operation and maintenance packet should take priority of the upward packets. Also, the bandwidth informing packet has the same priority as the downward packets though the bandwidth informing packet should take priority of the downward packets. Also, in each child station device, the operation and maintenance packet taking priority of the upward packets is multiplexed with the upward packets and is stored with the upward packets in the buffer 203. Therefore, in cases where an upward transmission bandwidth allocated to a specific child station device is low due to a dynamic control for the upward transmission bandwidth, when a large number of upward packets exceeding the upward transmission bandwidth are input to the specific child station device and are stored in the buffer 203, the operation and maintenance packet, which should be preferentially sent to the parent station device 221, is placed after positions of the upward packets in the buffer 203. Therefore, a problem has arisen that the sending of the operation and maintenance packet to the parent station device 221 is delayed. Also, in cases where upward packets exceeding the upward transmission bandwidth allocated to a child station device are input to the child station device, another problem has arisen that the operation and maintenance packet is not stored in the buffer 203. That is, the operation and maintenance packet is not sent to the parent station device 221.

As is described above, the conventional communication system shown in Fig. 14 is operated according to the method of detecting a traffic volume of upward packets of each child station device in the parent station device 221. In the same manner, in a conventional communication system operated according to the method of detecting a traffic volume of upward packets of each child station device in the child station device, though the operation and maintenance packet and an information packet including information of a traffic volume of upward packets detected in each child station device should be preferentially sent to the parent station device 121, a problem has arisen that the sending of both the operation and maintenance packet and the information packet including information of a traffic volume of upward packets detected in each child station device to the parent station device 121 is delayed or both the operation and maintenance packet and the information packet are not sent.

### SUMMARY OF THE INVENTION

A first object of the present invention is to provide, with due consideration to the drawbacks of the conventional communication control device and the conventional communication system, a communication control device, a communication system and a method of allocating slots in which a traffic volume of upward packets of an upward signal sent from each child station device is accurately estimated in a short time to properly allocate a transmission bandwidth of the upward signal among child station devices.

Also, a subordinate object of the present invention is to provide a communication control device in which a surplus transmission bandwidth for the upward signal is efficiently used at a low cost by a plurality of child station devices by using the communication control device as a parent station device.

Also, a second object of the present invention is to provide a communication control device and a communication control method in which an upward transmission bandwidth is properly and stably allocated to a child station device without being influenced on a traffic characteristic of upward information packets sent from the child station device.

Also, a third object of the present invention is to provide a parent station device, a child station device and a communication system in which a high priority packet such as a high priority operation and maintenance packet is reliably sent from a child station device without any delay or failure in the sending of the high priority packet even though an upward transmission bandwidth control is performed to dynamically allocate an upward transmission bandwidth to each child station device.

The first object is achieved by the provision of a communication control device functioning as a parent station device, which is connected with a plurality of child station devices through a single transmission medium and a multiplexing-demultiplexing unit, comprising a slot allocation information inserting unit for determining slot allocation information indicating the allocation of slots of an upward signal to each child station device and inserting the slot allocation information of the child station devices into a downward signal, a slot allocation information storing unit for storing the slot allocation information determined in the slot allocation information inserting unit, a packet checking unit for checking whether or not upward packets exists in slots of an upward signal and producing packet existence information, a traffic estimating unit for detecting the existence of the upward packets in prescribed slots corresponding to the slot allocation information of each child station device stored in the slot allocation information storing unit according to the packet existence information produced by the packet checking unit and estimating a traffic volume of upward packets sent from the child station device in a future time according to the existence of the upward packets in the prescribed slots corresponding to the slot allocation information of the child station device, and a slot allocation changing unit for changing the slot allocation information of the child station devices determined by the slot allocation information inserting unit according to the estimation of the traffic volume obtained in the traffic estimating unit.

In the above configuration, the slot allocation information of the child station devices is changed each time the estimation of the traffic volume is obtained in the traffic estimating unit.

Accordingly, a traffic volume of upward packets of an upward signal sent from each child station device in a future time can be accurately estimated in a short time, and a transmission bandwidth of the upward signal can be properly allocated among child station devices.

Also, because it is not required to send information indicating the excess of upward packets stored in a buffer of each child station device to the communication control device, the configuration of each child station device can be simplified, and the manufacturing cost of each child station device can be reduced. In particular, as the number of child station devices is increased, the manufacturing cost of the child station devices can be further reduced. Also, the number of child station devices can be easily increased, and the communication system can be further widely used. Also, the delay or discard of the information can be prevented because the information is not sent to the communication control device. Therefore, a traffic volume of upward packets output from each child station device can be detected in the communication control device in a short time.

It is preferred that slots of the upward signal received after the passage of a known delay time from the insertion of the slot allocation information performed by the slot allocation information inserting unit is detected by the packet checking unit as the prescribed slots corresponding to the slot allocation information to detect the existence of the upward packets in the prescribed slots.

Therefore, the child station device corresponding to the upward packets received can be recognized in the traffic estimating unit.

It is preferred that the traffic volume of upward packets sent from each child station device in the future time is estimated by the packet checking unit according to the existence of the upward packets in the prescribed slots corresponding to the slot allocation information of the child station device and a traffic estimated result obtained in a past time.

Therefore, a traffic volume of upward packets of an upward signal sent from each child station device in a future time can be accurately estimated in a shorter time. Also, even though the traffic volume is periodically changed, the traffic volume can be accurately estimated.

It is preferred that a periodic change of the traffic volume is estimated by the packet checking unit according to the existence of the upward packets in the prescribed slots corresponding to the slot allocation information of the child station device and a traffic estimated result obtained in a past time.

Therefore, the traffic volume periodically changed can be accurately estimated.

It is preferred that slots corresponding to a minimum transmission bandwidth of each child station device are allocated to the child station device by the slot allocation changing unit, and a surplus transmission bandwidth is given to one child station device or is shared among the child station devices by the slot allocation changing unit according to the estimation of the traffic volume obtained in the traffic estimating unit.

Therefore, a surplus transmission bandwidth of the upward signal can be properly shared among child station devices. Also, a surplus transmission bandwidth of the upward signal can be efficiently used at a low cost by a plurality of child station devices by using the communication control device as a parent station device.

It is preferred that slots corresponding to a minimum transmission bandwidth of each child station device is allocated to the child station device in an initial allocation by the slot allocation changing unit.

Also, it is preferred that slots corresponding to a minimum transmission bandwidth of each child station device is allocated to the child station device in an initial allocation by the slot allocation changing unit, and a surplus transmission bandwidth is initially given to one child station device or is shared among the child station devices by the slot allocation changing unit at a prescribed proportion according to the estimation of the traffic volume obtained in the traffic estimating unit.

Therefore, a time from the initial sharing of the surplus transmission bandwidth to the conversion of the appropriate sharing can be shortened, the surplus transmission bandwidth can be appropriately shared among the child station devices in a short time, and the influence of an extreme change in the allocation to one child station device on the allocation to another child station device can be suppressed.

It is preferred that specific slots of the upward signal are successively allocated to one child station device by the slot allocation changing unit until the estimation of the traffic volume in the child station device is obtained in the traffic estimating unit.

Accordingly, traffic characteristics of the child station devices can be grasped in a short time, and the transmission bandwidth can be appropriately allocated among the child station devices in a short time.

The first object is also achieved by the provision of a communication system, comprising a communication control device functioning as a parent station device, and a plurality of child station devices, which are connected with the communication control device through a single transmission medium and a multiplexing-demultiplexing unit, for respectively inserting upward packets in particular slots of an upward signal according to slot allocation information which indicates the allocation of the slots of the upward signal to the child station device and is inserted into a downward signal sent from the communication control device. The communication control device comprises a slot allocation information inserting unit for determining the slot allocation information of each child station device and inserting the slot allocation information of the child station devices into the downward signal, a slot allocation information storing unit for storing the slot allocation information determined in the slot allocation information inserting unit, a packet checking unit for checking whether or not the upward packets exists in slots of the upward signal and producing packet existence information, a traffic estimating unit for detecting the existence of the upward packets in prescribed slots corresponding to the slot allocation information of each child station device stored in the slot allocation information storing unit according to the packet existence information produced by the packet checking unit and estimating a traffic volume of upward packets sent from the child station device in a future time according to the existence of the upward packets in the prescribed slots corresponding to the slot allocation information of the child station device, and a slot allocation changing unit for changing the slot allocation information of the child station devices determined by the slot allocation information inserting unit according to the estimation of the traffic volume obtained in the traffic estimating unit.

In the above configuration, the slot allocation information of the child station devices is changed each time the estimation of the traffic volume is obtained in the traffic estimating unit.

Accordingly, a traffic volume of upward packets of an upward signal sent from each child station device in a future time can be accurately estimated in a short time, and a transmission bandwidth of the upward signal can be properly allocated among child station devices.

The first object is also achieved by the provision of a slot allocating method, in which slots of an upward signal is allocated among a plurality of child station devices by a communication control device functioning as a parent station device in a communication system in which the communication control device is connected with the child station devices through a single transmission medium and a multiplexing-demultiplexing unit, comprising the steps of determining the allocation of the slots among the child station devices, inserting slot allocation information, which indicates the allocation of the slots of the upward signal to each child station device, into a downward signal, storing the slot allocation information of the child station devices, estimating a traffic volume of upward packets sent from each child station device in a future time according to the existence of the upward packets in prescribed slots corresponding to the slot allocation information of the child station device, and changing the slot allocation information of the child station devices according to the estimation of the traffic volume in the child station devices.

Accordingly, a traffic volume of upward packets of an upward signal sent from each child station device in a future time can be accurately estimated in a short time, and a transmission bandwidth of the upward signal can be properly allocated among child station devices.

Also, because it is not required to send information indicating the excess of upward packets stored in a buffer of each child station device to the communication control device, the configuration of each child station device can be simplified, and the manufacturing cost of each child station device can be reduced.

The second object is achieved by the provision of a communication control device, which is connected with a plurality of child station devices through a single transmission medium and a multiplexing-demultiplexing unit to communicate with the child station devices, comprising an upward packet output permission instruction producing unit for producing an upward packet output permission instruction indicating the allocation of the usable slots of an upward signal for each child station device, an identification information producing unit for producing identification information from both a transmission delay time between the communication control device and one child station device and the upward packet output permission instruction of the child station device produced by the upward packet output permission instruction producing unit for each child station device, an upward packet output permission instruction sending unit for sending each upward packet output permission instruction produced by the upward packet output permission instruction producing unit to the corresponding child station device to allow each child station device output upward packets arranged in the usable slots, a packet type judging unit for judging whether each of a plurality of upward packets sent from the child station devices in response to the upward packet output permission instructions produced by the upward packet output permission instruction producing unit is an upward information packet having valid information or an empty packet having invalid information, an upward traffic measuring unit for identifying each child station device, from which a plurality of upward information packets and empty packets currently judged by the packet type judging unit are output, according to the identification information of the child station device produced by the identification information producing unit and measuring a traffic volume of the upward information packets output from each identified child station device according to packet type information obtained by the packet type judging unit, an upward traffic estimating unit for estimating a traffic characteristic of the upward information packets output from each child station device according to the upward packet output permission instruction produced by the upward packet output permission instruction producing unit and the traffic volume measured by the upward traffic measuring unit, and an upward bandwidth allocation determining unit for determining an upward transmission bandwidth allocated to each child station device according to the traffic characteristic estimated by the upward traffic estimating unit and changing the upward packet output permission instruction produced by the upward packet output permission instruction producing unit according to the upward transmission bandwidth for each child station device to make the identification information producing unit change the identification information according to the changed upward packet output permission instruction for each child station device and to make the upward packet output permission instruction sending unit send each changed upward packet output permission instruction to the corresponding child station device.

Also, the second object is achieved by the provision of a communication control method in a communication between a communication control device and a plurality of child station devices through a single transmission medium and a multiplexing-demultiplexing unit, comprising a step of producing an upward packet output permission instruction indicating the allocation of the usable slots of an upward signal for each child station device, a step of producing identification information from both a transmission delay time between the communication control device and one child station device and the upward packet output permission instruction of the child station device for each child station device a step of sending each upward packet output permission instruction to the corresponding child station device to allow each child station device output upward packets arranged in the usable slots, a step of judging whether each of a plurality of upward packets sent from the child station devices in response to the upward packet output permission instructions is an upward information packet having valid information or an empty packet having invalid information, a step of identifying each child station device, from which a plurality of upward information packets and empty packets currently judged are output, according to the identification information of the child station device, a step of measuring a traffic volume of the upward information packets output from each identified child station device according to packet type information obtained in the judging step, a step of estimating a traffic characteristic of the upward information packets output from each child station device according to both the upward packet output permission instruction and the traffic volume, a step of determining an upward transmission bandwidth allocated to each child station device according to the traffic characteristic, and, a step of changing the upward packet output permission instruction according to the upward transmission bandwidth for each child station device to change the identification information according to the changed upward packet output permission instruction for each child station device and to send each changed upward packet output permission instruction to the corresponding child station device.

In the above configuration or steps, an actual traffic volume of the upward information packets output from each child station device is measured by judging a type of each upward packet received in the communication control device and identifying the child station device corresponding to the upward packet currently received. Therefore, a traffic characteristic of the upward information packets output from each child station device is estimated according to the actual traffic volume of the child station device and an allowable traffic volume indicated by the upward packet output permission instruction of the child station device.

Accordingly, an upward transmission bandwidth required by each child station device can be allocated according to the traffic characteristic of the child station device, and the upward transmission bandwidth can be properly and stably allocated to each child station device without being influenced on the traffic characteristic of upward information packets sent from the child station device.

It is preferred that a plurality of slots of the upward signal of the upward packets output from the child station devices are partitioned into a plurality of upward transmission bandwidth control frames by the upward bandwidth allocation determining unit so as to control the outputting of the upward packets from each child station device in response to the corresponding upward packet output permission instruction changed by the upward bandwidth allocation determining unit in each upward transmission bandwidth control frame, and the corresponding upward packet output permission instruction instructs the corresponding child station device to output a plurality of upward packets at equal intervals in each upward transmission bandwidth control frame.

It is also preferred that the communication control method further comprises a step of partitioning a plurality of slots of the upward signal of the upward packets output from the child station devices into a plurality of upward transmission bandwidth control frames, a step of controlling the outputting of the upward packets from each child station device in response to the corresponding changed upward packet output permission instruction in each upward transmission bandwidth control frame, and a step of instructing the corresponding child station device according to the corresponding upward packet output permission instruction to output a plurality of upward packets at equal intervals in each upward transmission bandwidth control frame.

In the above configuration or steps, the outputting of the upward packets from each child station device is controlled according to the upward packet output permission instruction in each upward transmission bandwidth control frame. Therefore, the upward packets can be reliably output from each child station device according to the upward packet output permission instruction.

It is preferred that a plurality of slots of the upward signal of the upward packets output from the child station devices are partitioned into a plurality of upward transmission bandwidth control frames by the upward bandwidth allocation determining unit so as to control the outputting of the upward packets from each child station device in response to the corresponding upward packet output permission instruction changed by the upward bandwidth allocation determining unit in each upward transmission bandwidth control frame, and the corresponding upward packet output permission instruction instructs the corresponding child station device to output a plurality of upward packets at unequal intervals in each upward transmission bandwidth control frame.

It is preferred that the communication control method further comprises a step of partitioning a plurality of slots of the upward signal of the upward packets output from the child station devices into a plurality of upward transmission bandwidth control frames, a step of controlling the outputting of the upward packets from each child station device in response to the corresponding changed upward packet output permission instruction in each upward transmission bandwidth control frame, and a step of instructing the corresponding child station device according to the corresponding upward packet output permission instruction to output a plurality of upward packets at unequal intervals in each upward transmission bandwidth control frame.

In the above configuration or steps, there is a probability that the traffic characteristic of one child station device cannot be estimated according to the traffic volume of the upward information packets based on the outputting of the upward packets at equal intervals in cases where a series of upward information packets is intermittently output at a periodic burst traffic from the child station device at a frequency shorter than the upward transmission bandwidth control frame. However, because the upward packets are output at unequal intervals, the traffic characteristic can be reliably estimated.

It is preferred that the traffic volume of the upward information packets output from each identified child station device is measured by the upward traffic measuring unit by measuring an upward information packet interval of each pair of upward information packets output from the identified child station device and the number of empty packets which are output from the identified child station device and are arranged between the pair of upward information packets, and the traffic characteristic is estimated by the upward traffic estimating unit according to the upward packet output permission instruction, information of the upward information packet intervals of the upward information packets and information of the number of empty packets.

It is preferred that the step of measuring the traffic volume comprises the step of measuring an upward information packet interval of each pair of upward information packets output from the identified child station device and the number of empty packets which are output from the identified child station device and are arranged between the pair of upward information packets, and the step of estimating the traffic characteristic comprises the step of estimating the traffic characteristic according to the upward packet output permission instruction, information of the upward information packet intervals of the upward information packets and information of the number of empty packets.

In the above configuration or steps, the traffic characteristic is estimated according to the upward information packet interval and the number of empty packets. Accordingly, the traffic characteristic can be reliably estimated.

It is preferred that a length of each upward transmission bandwidth control frame obtained by the upward bandwidth allocation determining unit is changeable.

In the above configuration or steps, there is a probability that the traffic characteristic of one child station device cannot be estimated in cases where the length of each upward transmission bandwidth control frame is fixed. However, because the length of each upward transmission bandwidth control frame is changeable, the length of the upward transmission bandwidth control frame for the child station device is changed. Accordingly, the traffic characteristic of the child station device can be reliably estimated.

It is preferred that a transition frame is inserted into the upward transmission bandwidth control frames by the upward bandwidth allocation determining unit so as to smoothly change the upward transmission bandwidth allocated to one child station device in cases where the upward transmission bandwidth allocated to the child station device by the upward bandwidth allocation determining unit is changed.

It is also preferred that the communication control method further comprises a step of inserting a transition frame into the upward transmission bandwidth control frames so as to smoothly change the upward transmission bandwidth allocated to one child station device in cases where the upward transmission bandwidth allocated to the child station device is changed.

In the above configuration or steps, even though the upward transmission bandwidth allocated to each child station device is considerably changed, because a transition frame is inserted into the upward transmission bandwidth control frames, the upward transmission bandwidth allocated to the child station device can be smoothly changed. Accordingly, the allocation of he upward transmission bandwidth can be stably performed.

It is preferred that the traffic volume of the upward information packets output from each identified child station device is measured by the upward traffic measuring unit by measuring an upward information packet interval of each pair of upward information packets output from the identified child station device, an empty packet interval of each pair of empty packets output from the identified child station device and the number of empty packets which are output from the identified child station device and are arranged between the pair of upward information packets, and the traffic characteristic of each child station device is estimated by the upward traffic estimating unit according to the upward packet output permission instruction, information of the upward information packet intervals of the upward information packets, information of the empty packet intervals of the empty packets and information of the number of empty packets in cases where a plurality of upward packets are output from the child station device at unequal intervals in each upward transmission bandwidth control frame.

It is also preferred that the step of measuring the traffic volume comprises a step of measuring an upward information packet interval of each pair of upward information packets output from the identified child station device, an empty packet interval of each pair of empty packets output from the identified child station device and the number of empty packets which are output from the identified child station device and are arranged between the pair of upward information packets, and the step of estimating the traffic characteristic comprises a step of estimating the traffic characteristic of each child station device according to the upward packet output permission instruction, information of the upward information packet intervals of the upward information packets, information of the empty packet intervals of the empty packets and information of the number of empty packets in cases where a plurality of upward packets are output from the child station device at unequal intervals in each upward transmission bandwidth control frame.

In the above configuration or steps, even though a series of upward information packets is intermittently output at a periodic burst traffic from one child station device at a frequency shorter than the upward transmission bandwidth control frame, because the upward information packet intervals, the empty packet intervals and the number of empty packets are measured according to the upward packets output at unequal intervals in each upward transmission bandwidth control frame, the traffic characteristic of the child station device can be reliably estimated.

The third object is achieved by the provision of a parent station device, which is connected with a plurality of child station devices through a single transmission medium and a multiplexing-demultiplexing unit to communicate with the child station devices by sharing a whole upward transmission bandwidth of the transmission medium, comprising a packet type judging unit for judging whether each of a plurality of upward packets sent from the child station devices is a high priority packet, a low priority packet or an empty packet, a packet number counting unit for counting the number of high priority packets judged by the packet type judging unit for each child station device and counting the number of low priority packets or the number of empty packets judged by the packet type judging unit for each child station device, a surplus bandwidth sharing unit for calculating a surplus transmission bandwidth by subtracting both a sum of minimum transmission bandwidths allocated to the child station devices and a sum of high priority packet transmission bandwidths allocated to the child station devices from the whole upward transmission bandwidth of the transmission medium and sharing the surplus transmission bandwidth among the child station devices so as to give a partial surplus transmission bandwidth to each child station device according to the number of low priority packets or the number of empty packets counted by the packet number counting unit for the child station device, a bandwidth adding unit for calculating an upward transmission bandwidth allocated to each child station device by adding the minimum transmission bandwidth allocated to the child station device and the high priority packet transmission bandwidth allocated to the child station device to the partial surplus transmission bandwidth of the child station device shared by the surplus bandwidth sharing unit, a bandwidth informing packet producing unit for producing an upward transmission bandwidth informing packet having information of the upward transmission bandwidth of each child station device calculated by the bandwidth adding unit, and a packet multiplexing unit for multiplexing the upward transmission bandwidth informing packets of the child station devices produced by the bandwidth informing packet producing unit with downward packets to send the upward transmission bandwidth informing packets multiplexed with the downward packets to the child station devices.

In the above configuration, the high priority packet transmission bandwidth is included in the upward transmission bandwidth of each child station device in the bandwidth adding unit to send the high priority packets taking priority of the low priority packets from the child station device to the parent station device.

Accordingly, the high priority packet transmission bandwidth for the sending of the high priority packets can be always guaranteed. Also, even though an upward transmission bandwidth control is performed to dynamically allocate an upward transmission bandwidth to each child station device, the high priority packets can be reliably sent from each child station device to the parent station device without any delay or failure in the sending of the high priority packets.

It is preferred that each of the upward packets sent from the child station devices is judged by the packet type judging unit to be a communication traffic informing packet having information of a communication traffic of the upward packets, a high priority packet, a low priority packet or an empty packet, the surplus transmission bandwidth is calculated by the surplus bandwidth sharing unit by subtracting the sum of the minimum transmission bandwidths allocated to the child station devices, the sum of the high priority packet transmission bandwidths allocated to the child station devices and a sum of communication traffic informing packet transmission bandwidths allocated to the child station devices from the whole upward transmission bandwidth of the transmission medium, the partial surplus transmission bandwidth of the surplus transmission bandwidth is given to each child station device according to the number of low priority packets or the number of empty packets counted for the child station device by the packet number counting unit, and the upward transmission bandwidth allocated to each child station device is calculated by the bandwidth adding unit by adding the minimum transmission bandwidth allocated to the child station device, the high priority packet transmission bandwidth allocated to the child station device and the communication traffic informing packet transmission bandwidth allocated to the child station device to the partial surplus transmission bandwidth of the child station device given by the surplus bandwidth sharing unit.

In the above configuration, the communication traffic informing packet transmission bandwidth and the high priority packet transmission bandwidth are included in the upward transmission bandwidth of each child station device in the bandwidth adding unit to send the communication traffic informing packets and the high priority packets taking priority of the low priority packets from each child station device to the parent station device.

Accordingly, the communication traffic informing packet transmission bandwidth for the sending of the communication traffic informing packets can be always guaranteed, and the high priority packet transmission bandwidth for the sending of the high priority packets can be always guaranteed. Also, even though an upward transmission bandwidth control is performed to dynamically allocate an upward transmission bandwidth to each child station device, the communication traffic informing packets and the high priority packets can be reliably sent without any delay or failure in the sending of the communication traffic informing packets and the high priority packets.

The third object is also achieved by the provision of a child station device, which is connected with a parent station device through a single transmission medium and a multiplexing-demultiplexing unit to communicate with the parent station device by sharing a whole upward transmission bandwidth of the transmission medium with other station devices, comprising a bandwidth allocation extracting unit for detecting an upward transmission bandwidth informing packet directed to the child station device from downward packets sent from the parent station device and extracting an upward transmission bandwidth allocated to the child station device from the upward transmission bandwidth informing packet, a high priority packet producing unit for producing a high priority packet, a high priority buffer for storing the high priority packet produced by the high priority packet producing unit, a low priority buffer for storing a low priority packet, an empty packet producing unit for producing an empty packet in cases where neither the high priority packet nor the low priority packet is stored in the high priority buffer or the low priority buffer at an upward packet output time, and a reading-out control unit for determining the upward packet output time of the child station device according to the upward transmission bandwidth extracted by the bandwidth allocation extracting unit, outputting the high priority packet of the high priority buffer at the upward packet output time in cases where the high priority packet is stored in the high priority buffer at the upward packet output time, outputting the low priority packet stored in the low priority buffer at the upward packet output time in cases where the high priority packet is not stored in the high priority buffer at the upward packet output time, and sending the empty packet produced by the empty packet producing unit at the upward packet output time in cases where neither the high priority packet nor the low priority packet is stored in the high priority buffer or the low priority buffer at the upward packet output time.

In the above configuration, the high priority packets taking priority of the low priority packets are preferentially output from each child station device to the parent station device prior to the outputting of the low priority packets.

Accordingly, even though an upward transmission bandwidth control is performed to dynamically allocate an upward transmission bandwidth to each child station device, the high priority packets can be reliably sent without any delay or failure in the sending of the high priority packets.

It is preferred that the child station device further comprises a communication traffic informing packet producing unit for producing a communication traffic informing packet which has information of a communication traffic of the high priority packet and the low priority packet sent from the child station device to the parent station device, and a packet multiplexing unit for multiplexing the communication traffic informing packet with the high priority packet produced by the high priority packet producing unit so as to store the communication traffic informing packet multiplexed with the high priority packet in the high priority buffer and to send the communication traffic informing packet multiplexed with the high priority packet to the parent station device.

In the above configuration, the communication traffic informing packets and the high priority packets taking priority of the low priority packets are preferentially output from each child station device to the parent station device prior to the outputting of the low priority packets.

Accordingly, even though an upward transmission bandwidth control is performed to dynamically allocate an upward transmission bandwidth to each child station device, the communication traffic informing packets and the high priority packets can be reliably sent without any delay or failure in the sending of the communication traffic informing packets and the high priority packets.

The third object is also achieved by the provision of a communication system, in which a parent station device is connected with a plurality of child station devices through a single transmission medium and a multiplexing-demultiplexing unit to communicate between the parent station device and the child station devices by sharing a whole upward transmission bandwidth of the transmission medium, wherein
the parent station device comprises a packet type judging unit for judging whether each of a plurality of upward packets sent from the child station devices is a type of high priority packet, a type of low priority packet or a type of empty packet, a packet number counting unit for counting the number of high priority packets judged by the packet type judging unit for each child station device and counting the number of low priority packets or the number of empty packets judged by the packet type judging unit for each child station device, a surplus bandwidth sharing unit for calculating a surplus transmission bandwidth by subtracting both a sum of minimum transmission bandwidths allocated to the child station devices and a sum of high priority packet transmission bandwidths allocated to the child station devices from the whole upward transmission bandwidth of the transmission medium, and sharing the surplus transmission bandwidth among the child station devices so as to give a partial surplus transmission bandwidth to each child station device according to the number of low priority packets or the number of empty packets counted by the packet number counting unit for the child station device, a bandwidth adding unit for calculating an upward transmission bandwidth allocated to each child station device by adding the minimum transmission bandwidth allocated to the child station device and the high priority packet transmission bandwidth allocated to the child station device to the partial surplus transmission bandwidth of the child station device shared by the surplus bandwidth sharing unit, a bandwidth informing packet producing unit for producing an upward transmission bandwidth informing packet having information of the upward transmission bandwidth of each child station device calculated by the bandwidth adding unit, and a packet multiplexing unit for multiplexing the upward transmission bandwidth informing packets of the child station devices produced by the bandwidth informing packet producing unit with downward packets to send the upward transmission bandwidth informing packets multiplexed with the downward packets to the child station devices as a downward signal, and each of the child station devices comprises a bandwidth allocation extracting unit for detecting the upward transmission bandwidth informing packet directed to the child station device from downward signal sent from the packet multiplexing unit of the parent station device and extracting the upward transmission bandwidth allocated to the child station device from the upward transmission bandwidth informing packet, a high priority packet producing unit for producing a high priority packet, a high priority buffer for storing the high priority packet produced by the high priority packet producing unit, a low priority buffer for storing a low priority packet, an empty packet producing unit for producing an empty packet in cases where neither the high priority packet nor the low priority packet is stored in the high priority buffer or the low priority buffer at an upward packet output time, and a reading-out control unit for determining the upward packet output time of the child station device according to the upward transmission bandwidth extracted by the bandwidth allocation extracting unit, outputting the high priority packet of the high priority buffer at the upward packet output time as an upward packet in cases where the high priority packet is stored in the high priority buffer at the upward packet output time, outputting the low priority packet stored in the low priority buffer at the upward packet output time as an upward packet in cases where the high priority packet is not stored in the high priority buffer at the upward packet output time, and sending the empty packet produced by the empty packet producing unit at the upward packet output time as an upward packet in cases where neither the high priority packet nor the low priority packet is stored in the high priority buffer or the low priority buffer at the upward packet output time.

In the above configuration, the high priority packet transmission bandwidth is included in the upward transmission bandwidth of each child station device in the bandwidth adding unit to always guarantee the high priority packet transmission bandwidth for the sending of the high priority packets, and the high priority packets taking priority of the low priority packets are preferentially output from each child station device to the parent station device prior to the outputting of the low priority packets.

Accordingly, even though an upward transmission bandwidth control is performed to dynamically allocate an upward transmission bandwidth to each child station device, the high priority packets can be reliably sent from each child station device to the parent station device without any delay or failure in the sending of the high priority packets.

It is preferred that each of the child station devices further comprises a communication traffic informing packet producing unit for producing a communication traffic informing packet which has information of a communication traffic of the high priority packet and the low priority packet sent from the child station device to the parent station device, and a packet multiplexing unit for multiplexing the communication traffic informing packet with the high priority packet produced by the high priority packet producing unit so as to store the communication traffic informing packet multiplexed with the high priority packet in the high priority buffer and to send the communication traffic informing packet multiplexed with the high priority packet to the parent station device. In addition, each of the upward packets sent from the child station devices is judged by the packet type judging unit of the parent station device to be a type of communication traffic informing packet, a type of high priority packet, a type of low priority packet or a type of empty packet, the surplus transmission bandwidth is calculated by the surplus bandwidth sharing unit of the parent station device by subtracting the sum of the minimum transmission bandwidths allocated to the child station devices, the sum of the high priority packet transmission bandwidths allocated to the child station devices and a sum of communication traffic informing packet transmission bandwidths allocated to the child station devices from the whole upward transmission bandwidth of the transmission medium, the partial surplus transmission bandwidth of the surplus transmission bandwidth is given to each child station device according to the number of low priority packets or the number of empty packets counted for the child station device by the packet number counting unit of the parent station device, and the upward transmission bandwidth allocated to each child station device is calculated by the bandwidth adding unit of the parent station device by adding the minimum transmission bandwidth allocated to the child station device, the high priority packet transmission bandwidth allocated to the child station device and the communication traffic informing packet transmission bandwidth allocated to the child station device to the partial surplus transmission bandwidth of the child station device given by the surplus bandwidth sharing unit of the parent station device.

In the above configuration, the communication traffic informing packet transmission bandwidth and the high priority packet transmission bandwidth are included in the upward transmission bandwidth of each child station device in the bandwidth adding unit to always guarantee the high priority packet transmission bandwidth and the high priority packet transmission bandwidth for the sending of the high priority packets and the high priority packets, and the high priority packets and the high priority packets taking priority of the low priority packets are preferentially output from each child station device to the parent station device prior to the outputting of the low priority packets.

Accordingly, even though an upward transmission bandwidth control is performed to dynamically allocate an upward transmission bandwidth to each child station device, the high priority packets and the high priority packets can be reliably sent from each child station device to the parent station device without any delay or failure in the sending of the high priority packets and the high priority packets.

### BRIEF DESCRIPTION OF THE DRAWINGS

Fig. 1 is a block diagram showing the configuration of a communication system according to a first embodiment of the present invention;
Fig. 2 is a block diagram showing the configuration of a communication system according to a third embodiment of the present invention;
Fig. 3 is a block diagram showing the configuration of a communication system according to a sixth embodiment of the present invention;
Fig. 4 shows an example of a downward signal and an upward signal in the communication system shown in Fig. 3 in cases where an upward transmission bandwidth allocated to each child station device is controlled in each upward transmission bandwidth control frame of an upward signal;
Fig. 5A shows an upward information packet interval of upward information packets sent from a child station device in cases where the number of usable slots allocated to the child station device is large;
Fig. 5B shows an upward information packet interval of upward information packets sent from a child station device in cases where the number of usable slots allocated to the child station device is small.
Fig. 6 shows an output example of upward packets of a child station device in cases where a traffic volume of the upward packets is monotonously increased;
Fig. 7 shows a transition upward transmission bandwidth control frame inserted into upward transmission bandwidth control frames to gradually change an upward information packet interval according to the ninth embodiment;
Fig. 8 is a block diagram showing the configuration of a communication system comprising a parent station device and a plurality of child station devices according to a tenth embodiment of the present invention;
Fig. 9 is a block diagram showing the configuration of a communication system comprising a parent station device and a plurality of child station devices according to an eleventh embodiment of the present invention;
Fig. 10 is a view schematically showing the configuration of a communication system in which a plurality of child station devices share a transmission bandwidth of a transmission medium;
Fig. 11 is a timing chart of downward packets sent from a parent station device to child station devices and upward packets sent from the child station devices to the parent station device;
Fig. 12 is a block diagram of a conventional communication system operated according to a method of detecting a traffic volume of upward packets of each child station device in the child station device;
Fig. 13 is a block diagram of a conventional communication system operated according to a method of detecting a traffic volume of information packets of each child station device in a communication control device; and
Fig. 14 is a block diagram of a conventional communication system operated according to a method of detecting a traffic volume of upward packets of each child station device in a parent station device.

### DETAILED DESCRIPTION OF THE PREFERRED EMBODIMENTS

Embodiments of the present invention will now be described with reference to the accompanying drawings.

### EMBODIMENT 1

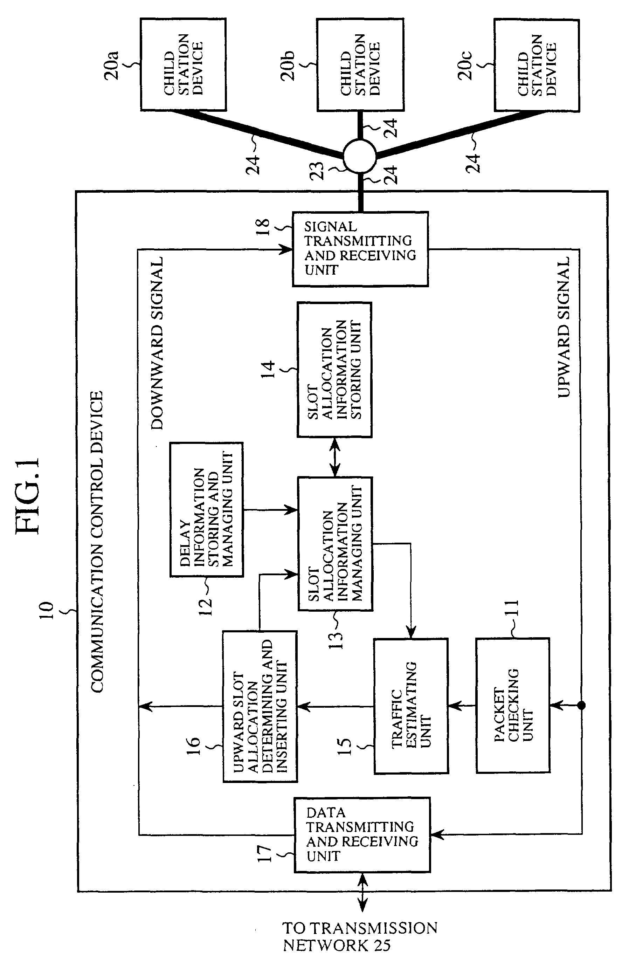

Fig. 1 is a block diagram showing the configuration of a communication system according to a first embodiment of the present invention.

In Fig. 1, 10 indicates a communication control device functioning as a parent station device. The communication control device 10 is connected with a transmission network 25 placed in the outside of the communication control device 10. 20a, 20b and 20c indicate a plurality of child station devices respectively. 23 indicates the multiplexing- demultiplexing unit. 24 indicates the transmission medium such as an optical fiber. The child station devices 20a, 20b and 20c are connected with the communication control device 10 through the multiplexing-demultiplexing unit 23 and the transmission medium 24, and the child station devices 20a, 20b and 20c receive data from a plurality of subscribers (not shown) according to contracts with the subscribers.

In each child station device, a plurality of upward information packets (or valid packets) having normal information and a plurality of empty packets (or invalid packets) having invalid information are arranged as upward packets in slots of an upward signal in which the child station device is allowed to arrange the upward packets, and the upward packets output from the child station devices 20a to 20c are multiplexed with each other in the multiplexing-demultiplexing unit 23 and are sent to the communication control device 10 as an upward signal.

In the communication control device 10, 11 indicates a packet checking unit for checking whether or not an upward information packet of an upward signal sent from the child station devices 20a to 20c exists in a slot of the upward signal for each of all slots of the upward signal and producing packet existence information indicating the existence or non-existence of the upward information packets in the slots of the upward signal. That is, in cases where no upward information packet exists in a specific slot of the upward signal, the packet existence information indicates the non-existence of the upward information packet in the specific slot of the upward signal.

12 indicates a delay information storing and managing unit for storing and managing delay time information indicating a delay time from the sending-out of a downward signal having slot allocation information to the reception of upward information packets sent from each child station device. A delay time in the communication between the communication control device 10 and each child station device is actually measured, and the managing delay time information indicating the delay time is stored for each child station device. The slot allocation information of each child station device indicates the number of usable slots in an upward signal and positions of the usable slots, and the child station device is allowed to arrange upward information packets into the usable slots. A plurality of downward packets having the pieces of slot allocation information of the child station devices 20a to 20c are inserted into a downward signal, and the downward signal is sent from the communication control device 10 to the child station devices 20a to 20c. Also, in each child station device, upward information packets are arranged in usable slots designated by the slot allocation information of the child station device, an upward signal having the upward information packets is sent from the child station devices 20a to 20c, and the upward signal is received in the communication control device 10.

14 indicates a slot allocation information storing unit for storing the pieces of slot allocation information of the child station devices 20a to 20c.

13 indicates a slot allocation information managing unit for receiving the pieces of slot allocation information of the child station devices 20a to 20c, writing the pieces of slot allocation information of the child station devices 20a to 20c in the slot allocation information storing unit 14, reading out the pieces of slot allocation information of the child station devices 20a to 20c from the slot allocation information storing unit 14, reading out the pieces of delay time information of all child station devices 20a to 20c from the delay information storing and managing unit 12, checking according to the pieces of delay time information and the pieces of slot allocation information which child station device outputs an upward information packet which is arranged in a slot of the upward signal and is currently received in the packet checking unit 11, recognizing one child station device corresponding to the currently received upward information packet for each upward information packet, and detecting the number of slots, in which the recognized child station device is allowed to arrange upward information packets, according to the slot allocation information of the recognized child station device.

15 indicates a traffic estimating unit for receiving the packet existence information indicating the existence or non-existence of the upward information packets in the slots from the packet checking unit 11, receiving management information (the recognized child station device corresponding to each upward information packet currently received and the number of slots of the upward signal allowed for the recognized child station device) from the slot allocation information managing unit 13, estimating a traffic volume of the upward information packets sent in the future from the recognized child station device according to the management information, estimating a time-wise change of the traffic volume of the upward information packets sent from the recognized child station device as a traffic characteristic, and estimating a correlation of the traffic volumes of the upward information packets among the child station devices 20a to 20c as another traffic characteristic.

16 indicates an upward slot allocation determining and inserting unit (slot allocation information inserting means and slot allocation changing means) for allocating a whole transmission bandwidth (or an upward transmission bandwidth) of the transmission medium 24 including a surplus transmission bandwidth among the child station devices 20a to 20c according to the traffic estimated result obtained in the traffic estimating unit 15, transforming a transmission bandwidth allocated to each child station device into the slot allocation information of the child station device, producing a downward packet having the slot allocation information of each child station device, and inserting the downward packets having the pieces of slot allocation information of the child station devices 20a to 20c into a downward signal. A plurality of upward information packets output from each child station device pass through the transmission medium 24 in the transmission bandwidth allocated to child station device.

17 indicates a data transmitting and receiving unit for transmitting data of the upward signal sent from the child station devices 20a to 20c to the transmission network 25 and receiving data sent from the transmission network 25. 18 indicates a signal transmitting and receiving unit for transmitting the downward signal sent from the upward slot allocation determining and inserting unit 16 to the child station devices 20a to 20c and receiving an upward signal of upward information packets multiplexed with each other from the child station devices 20a to 20c.

Next, an operation of the communication system will be described below.

In the communication control device 10 functioning as a parent station device, the number of usable slots allowed to each child station device and positions of the usable slots are initially determined as slot allocation information in the upward slot allocation determining and inserting unit 16 according to a minimum transmission bandwidth of an upward signal sent from the child station device. The minimum transmission bandwidth is set in advance according to a contract with the child station device. Thereafter, a downward packet having the slot allocation information of one child station device is produced for each child station device, the downward packets having the pieces of slot allocation information of the child station devices 20a to 20c are inserted into a downward signal, and the downward signal having the pieces of slot allocation information of the child station devices 20a to 20c is simultaneously sent to the child station devices 20a to 20c. Also, the pieces of slot allocation information of the child station devices 20a to 20c are sent from the upward slot allocation determining and inserting unit 16 to the slot allocation information managing unit 13. The slot allocation information managing unit 13 controls the slot allocation information storing unit 14 to store the pieces of slot allocation information of the child station devices 20a to 20c.

In each of the child station devices 20a to 20c, downward packets directed to one child station device are received and taken in the child station device. In cases where a downward packet having the slot allocation information of the child station device is received, the slot allocation information of the child station device is extracted from the downward packet. Thereafter, the child station device detects positions of slots, in which the child station device is allowed to arrange upward information packets, and the number of slots according to the slot allocation information. Thereafter, in cases where there is/are an upward information packet or upward information packets to be output from the child station device to the communication control device 10, when a prescribed delay time agreeing with the communication control device 10 passes from the sending of the downward packet having the slot allocation information, the upward information packets are inserted into the slots of an upward signal allowed by the communication control device 10 within the restriction of the slot allocation information, and the upward information packets are output from the child station device.

In the multiplexing-demultiplexing unit 23, the upward information packets output at a burst from each child station device are received, and the upward information packets output from the child station devices 20a to 20c are multiplexed to an upward signal, and the upward signal is sent to the communication control device 10.

In the communication control device 10, the upward signal is received in the signal transmitting and receiving unit 18, and data of the upward signal is transmitted from the data transmitting and receiving unit 17 to the transmission network 25. Also, in the packet checking unit 11, it is checked whether or not an upward information packet sent from one child station device exists in a slot of the upward signal. This check is performed for each of all slots of the upward signal. Thereafter, packet existence information indicating the existence or non-existence of upwards packets in slots of the upward information packets is sent from the packet checking unit 11 to the traffic estimating unit 15.

Also, in the communication control device 10, the pieces of delay time information respectively indicating a delay time in the communication with one child station device are read out from the delay information storing and managing unit 12 to the slot allocation information managing unit 13, and the pieces of slot allocation information of the child station devices 20a to 20c are read out from the slot allocation information storing unit 14 to the slot allocation information managing unit 13. In the slot allocation information managing unit 13, it is recognized according to the delay times of the pieces of delay time information, the pieces of slot allocation information and a current time which child station device outputs each upward information packet inserted into a slot of the upward signal currently received. Thereafter, information indicating the number of usable slots, in which the recognized child station device is allowed to arrange upward information packets, is detected according to the slot allocation information of the recognized child station device. Information of the recognized child station device and information of the number of usable slots obtained in the slot allocation information managing unit 13 are sent to the traffic estimating unit 15.

In the traffic estimating unit 15, the packet existence information indicating the existence or non-existence of the upward information packets in the slots of the upward signal currently received is also received from the packet checking unit 11, and a traffic volume of the upward information packets sent from the recognized child station device in the future is estimated according to the information sent from the packet checking unit 11 and the information sent from the slot allocation information managing unit 13. That is, a ratio of the number of upward information packets actually arranged in usable slots allowed by the slot allocation information to the number of all usable slots indicated by the slot allocation information is, for example, calculated for the recognized child station device, a traffic volume of the upward information packets currently sent from the recognized child station device is detected, and a future traffic volume is estimated according to the current traffic volume. Also, a time-wise change of the traffic volume of the upward information packets sent from the recognized child station device is estimated as a traffic characteristic. Also, a correlation of the traffic volumes of the upward information packets among the child station devices 20a to 20c is estimated as another traffic characteristic. The traffic estimated result indicating the traffic volume in the recognized child station device and the traffic characteristics is obtained for each child station device and is sent to the upward slot allocation determining and inserting unit 16.

In the upward slot allocation determining and inserting unit 16, it is judged whether or not it is required to change the sharing of the surplus transmission bandwidth among the child station devices 20a to 20c. This judgment is performed according to the traffic estimated results sent from the traffic estimating unit 15. In cases where it is required to change the sharing of the surplus transmission bandwidth, slot allocation information indicating the number of slots and positions of the slots allocated to each child station device is changed, and downward packets having pieces of changed slot allocation information for the child station devices 20a to 20c are inserted into a downward signal directed to the child station devices 20a to 20c, and the downward signal is simultaneously sent to all child station devices 20a to 20c.

As is described above, in the first embodiment, the slot allocation information indicating the number of slots and positions of the slots allocated to each child station device is determined in the upward slot allocation determining and inserting unit 16, and the slot allocation information is inserted into the downward signal in the upward slot allocation determining and inserting unit 16. Also, a traffic volume of the upward information packets sent in the future from each child station device is estimated in the traffic estimating unit 15 according to the packet existence information of the child station device and the number of slots allowed to the child station device for each child station device, and the number of slots and positions of the slots allocated to each child station device are changed in the upward slot allocation determining and inserting unit 16 according to the estimated traffic volume. Accordingly, a traffic volume of the upward information packets sent from each child station device can be correctly estimated in a short time, and the transmission bandwidth of the upward signal can be appropriately allocated among all child station devices 20a to 20c.

Also, in the first embodiment, it is not required to send information indicating the excess of upward information packets stored in a buffer of each child station device to the communication control device 10, the configuration of each child station device can be simplified, and a manufacturing cost of each child station device can be reduced. In particular, as the number of child station devices is increased, the manufacturing cost of the child station devices can be further reduced.

Also, in the first embodiment, because it is not required to send information indicating the excess of upward information packets stored in a buffer of each child station device to the communication control device 10, the number of child station devices can be easily increased, and the communication system can be further widely used. Also, delay or failure in the sending of the information can be prevented because the information is not sent to the communication control device 10. Therefore, a traffic volume of upward information packets output from each child station device can be detected in the communication control device 10 in a short time. Accordingly, a surplus transmission bandwidth of an upward signal can be stably shared among a plurality of child station devices in a short time.

In the first embodiment, the existence of the upward information packets is checked in the packet checking unit 11 to estimate a traffic volume of the upward information packets in the future. However, it is applicable that the existence of the empty packets be checked in the packet checking unit 11. In this case, the existence of an empty packet in a slot of the upward signal is equivalent to the non-existence of an upward information packet in the slot of the upward signal, and the non-existence of an empty packet in a slot of the upward signal is equivalent to the existence of an upward information packet in the slot of the upward signal. Therefore, a traffic volume of the upward information packets in the future can be estimated in the same manner.

### EMBODIMENT 2

In a communication system according to a second embodiment of the present invention, each time a downward packet having slot allocation information of one child station device is send out from the upward slot allocation determining and inserting unit 16 to the child station device, the slot allocation information of the child station device is also sent from the upward slot allocation determining and inserting unit 16 to the slot allocation information managing unit 13, the delay time information of the child station device stored in the delay information storing and managing unit 12 is read out to the slot allocation information managing unit 13, and the slot allocation information of the child station device is stored in an area of the slot allocation information storing unit 14 corresponding to a delay time of the child station device indicated by the delay time information of the child station device. Thereafter, when an upward information packet of one child station device is received at a current time in the communication control device 10, the slot allocation information of the child station device, which is stored in the area of the slot allocation information storing unit 14 corresponding to the current time (which is determined according to a storing time of the slot allocation information of the child station device and the delay time of the child station device), is read out to the slot allocation information managing unit 13.

That is, in the slot allocation information storing unit 14, the pieces of slot allocation information of the child station devices 20a to 20c are stored in an estimated arriving order of upward information packets of the child station devices 20a to 20c. Each time an upward information packet of one child station device is currently received in the communication control device 10, the slot allocation information stored in the area of the slot allocation information storing unit 14 corresponding to the current time is read out to the slot allocation information managing unit 13.

In contrast, in the first embodiment, when a downward packet having slot allocation information of each child station device is send out from the upward slot allocation determining and inserting unit 16 to the child station device, the slot allocation information of the child station device is sent to the slot allocation information managing unit 13 and is stored the slot allocation information storing unit 14. Thereafter, when an upward information packet of one child station device is currently received in the communication control device 10, the delay time information of the child station device stored in the delay information storing and managing unit 12 is read out to the slot allocation information managing unit 13 according to the current time to recognize the child station device, the slot allocation information managing unit 13 detects an area, in which the slot allocation information of the recognized child station device is stored, and the slot allocation information of the recognized child station device is read out to the slot allocation information managing unit 13.

The other configuration and operation in the communication system according to the second embodiment is the same as that in the first embodiment, so that additional description of the other constituent elements is omitted.

In this second embodiment, it is applicable that the delay time information of one child station device is read out from the delay information storing and managing unit 12 to the slot allocation information managing unit 13 when a downward packet having the slot allocation information of the child station device is inserted into a downward signal in the upward slot allocation determining and inserting unit 16, a delay time indicated by the delay time information of the child station device is added to a counter (not shown) indicating a current time, and estimated time information indicating a sum of the delay time and the current time is stored with the slot allocation information of the child station device in the slot allocation information storing unit 14 so as to be related to the slot allocation information of the child station device. In this case, when a current time reaches a time indicated by the estimated time information, the slot allocation information related to the estimated time information is read out from the slot allocation information storing unit 14.

As is described above, in the second embodiment, the same effect as that in the first embodiment can be obtained. EMBODIMENT 3

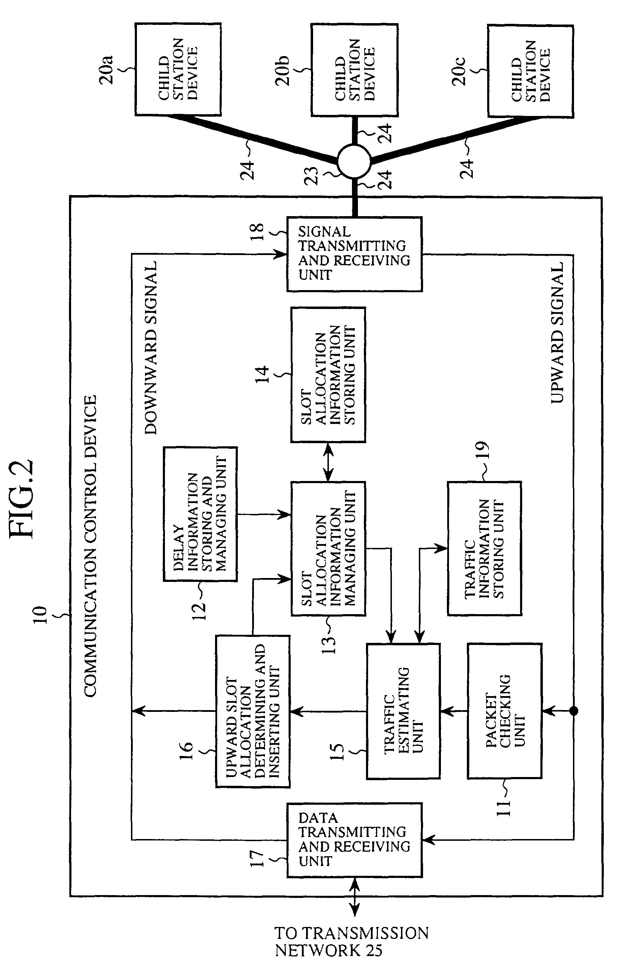

Fig. 2 is a block diagram showing the configuration of a communication system according to a third embodiment of the present invention.

In Fig. 2, 19 indicates a traffic information storing unit for storing the traffic estimated results of the child station devices 20a to 20c obtained in the traffic estimating unit 15 each time the traffic estimated results of the child station devices 20a to 20c are obtained in the traffic estimating unit 15. In the traffic estimating unit 15, a traffic volume of upward information packets sent from each child station device in a future time is estimated by considering the slot allocation information of the child station device, the information indicating the existence or non-existence of the upward information packets in the slots designated by the slot allocation information and the traffic estimated results of the child station device stored as data of a plurality of past times in the traffic information storing unit 19.

The other constituent elements in Fig. 2 are the same as those shown in Fig. 1, and additional description of those constituent elements is omitted.

Next, an operation of the communication system shown in Fig. 2 will be described.

In the traffic estimating unit 15, in an initial step, the information indicating the existence or non-existence of upward information packets of slot positions recommended by the communication control device 10 is received from the packet checking unit 11, the information of each recognized child station device, to which a slot of the upward signal currently received is allocated, is received from the slot allocation information managing unit 13, the information indicating the number of upward information packets possible to be sent from the recognized child station device is received from the slot allocation information managing unit 13, and a traffic volume of upward information packets sent from the recognized child station device in the future is initially estimated according to these pieces of information. The traffic volume is initially estimated for each child station device. Thereafter, the traffic estimated results of the child station device 20a to 20c are sent to the upward slot allocation determining and inserting unit 16, and the traffic estimated results are stored as traffic information of the past time in the traffic information storing unit 19.

Thereafter, in each of steps following the initial step, in the traffic estimating unit 15, the information indicating the existence or non-existence of upward information packets of slot positions recommended by the communication control device 10 is received from the packet checking unit 11, the information of each recognized child station device is received from the slot allocation information managing unit 13, and the information indicating the number of upward information packets possible to be sent from the recognized child station device is received from the slot allocation information managing unit 13. In addition, the traffic information in the past is read out from the traffic information storing unit 19 to the traffic estimating unit 15. Thereafter, a traffic volume of upward information packets sent from each child station device in the future is estimated according to these pieces of information. Thereafter, the traffic estimated results of the child station devices 20a to 20c currently obtained are sent to the upward slot allocation determining and inserting unit 16, and the traffic estimated results are stored as traffic information of a past time in the traffic information storing unit 19.

Therefore, in the traffic estimating unit 15, a traffic volume of upward information packets sent from each child station device in the future is estimated according to a traffic volume of upward information packets sent from the child station device at a current time and one traffic estimated result in one past time or a plurality of traffic estimated results in a plurality of past times.

For example, a specific child station device periodically communicates with the communication control device 10 at prescribed time intervals. In this case, a traffic volume of upward information packets sent from the specific child station device is suddenly increased just after the start of the periodic communication. Therefore, in cases where a traffic volume of upward information packets sent from the specific child station is estimated in a conventional communication system by measuring a traffic volume in a short time, there is a probability that the sharing of a surplus transmission bandwidth among a plurality of child station devices is considerably changed. Also, there is a probability that the change of a transmission bandwidth allocated to another child station device influences on a traffic volume in the specific child station. However, in the communication system according to the third embodiment, the periodic increase and decrease of the traffic volume in the specific child station is detected in the past, and the periodic increase and decrease of the traffic volume is stored in the traffic information storing unit 19. Therefore, it is possible that a partial surplus transmission bandwidth is sufficiently given to the specific child station in advance in the upward slot allocation determining and inserting unit 16 according to the traffic estimated result of the traffic estimating unit 15 just before the actual increase of the traffic volume in the specific child station. Also, it is possible that a partial surplus transmission bandwidth given to the specific child station is gradually increased until an estimated time before the rapid increase of the traffic volume in the specific child station at the estimated time.

Accordingly, the congestion of a traffic of upward information packets in the specific child station can be reduced, and the influence of a traffic in another child station on a traffic in the specific child station can be reduced.

The other operation in the communication system according to the third embodiment is the same as that in the first or second embodiment, and additional description of the other operation is omitted.

As is described above, in the third embodiment, a traffic volume of upward information packets sent from each child station device in the future is estimated in the traffic estimating unit 15 by considering the traffic estimated results in the past. Therefore, a traffic volume of upward information packets sent from each child station device in the future can be accurately estimated in a short time. Also, even though a traffic volume of upward information packets sent from each child station device is periodically increased and decreased, the traffic volume in the child station device can be accurately estimated.

### EMBODIMENT 4

In a communication system according to a fourth embodiment of the present invention, when slots are initially allocated to each child station device in the upward slot allocation determining and inserting unit 16 of the communication control device 10 shown in Fig. 1 or Fig. 2, a surplus transmission bandwidth is shared among the child station devices 20a to 20c according to presumed traffics in the child station devices 20a to 20c, a plurality of slots corresponding to a transmission bandwidth, which is obtained by adding a partial surplus transmission bandwidth given to each child station device to a minimum transmission bandwidth determined by a contract with the child station device, are allocated to the child station device.

For example, in cases where slots corresponding to a partial surplus transmission bandwidth are initially allocated to each child station device, slots corresponding to a wide partial surplus transmission bandwidth are allocated to a child station device in which it is presumed that a large amount of data is input by a subscriber using a wide minimum transmission bandwidth determined by a contract, and slots corresponding to a narrow partial surplus transmission bandwidth are allocated to a child station device in which it is presumed that a small amount of data is input by a subscriber using a narrow minimum transmission bandwidth determined by a contract.

Also, in cases where a subscriber communicates with the communication control device 10 through a child station device at a traffic volume having a burst characteristic and the child station device is known in advance, it is applicable that a wide partial surplus transmission bandwidth be given to the subscriber on condition that no influence is given to the other child station devices.

The other operation in the communication system according to the fourth embodiment is the same as that in the first, second or third embodiment, and additional description of the other operation is omitted.

As is described above, in the fourth embodiment, a surplus transmission bandwidth is initially shared among the child station devices 20a to 20c at a prescribed proportion. Therefore, a convergence time from the initial sharing of the surplus transmission bandwidth to an appropriate sharing can be shortened, and the surplus transmission bandwidth can be appropriately shared among the child station devices 20a to 20c in a short time. Also, it is prevented that the provision of a partial surplus transmission bandwidth to a child station device is extremely changed, and the influence of the extreme change of the provision of a partial surplus transmission bandwidth to a child station device on that to another child station device can be reduced.

### EMBODIMENT 5

In a communication system according to a fifth embodiment of the present invention, in cases where it is difficult to presume a traffic volume of a specific child station device, it is impossible to initially give a partial surplus transmission bandwidth to the specific child station device according to the fourth embodiment. Therefore, in a fifth embodiment, in this case, the estimation of a traffic volume of upward information packets sent from the specific child station device in the future is temporarily stopped in the communication control device 10 shown in Fig. 1 or Fig. 2, specific slots of an upward signal successively positioned are allocated to the specific child station device on condition that the other slots in the upward signal are allocated to the other child station devices without breaking contracts with the other child station devices, and the existence or non-existence of upward information packets of the specific child station device in the specific slots of the upward signal is checked to grasp traffic characteristics in the specific child station device. That is, the allocation of the specific slots of the upward signal to the specific child station device is continued until a traffic estimated result of the specific child station device is obtained in the traffic estimating unit 15.

The other operation in the communication system according to the fifth embodiment is the same as that in the fourth embodiment, and additional description of the other operation is omitted.

In the fifth embodiment, in cases where a subscriber communicates with the communication control device 10 through a child station device at a traffic characteristic not matching a contract with the communication control device 10, it is applicable that specific slots successively placed in an upward signal are allocated to the child station device.

As is described above, in the fifth embodiment, the specific slots successively placed in an upward signal are allocated to the specific child station device until a traffic estimated result of the specific child station device is obtained in the traffic estimating unit 15. Therefore, traffic characteristics of all child station devices 20a to 20c can be grasped in a short time. Accordingly, a transmission bandwidth can be appropriately allocated among all child station devices 20a to 20c in a short time.

### EMBODIMENT 6

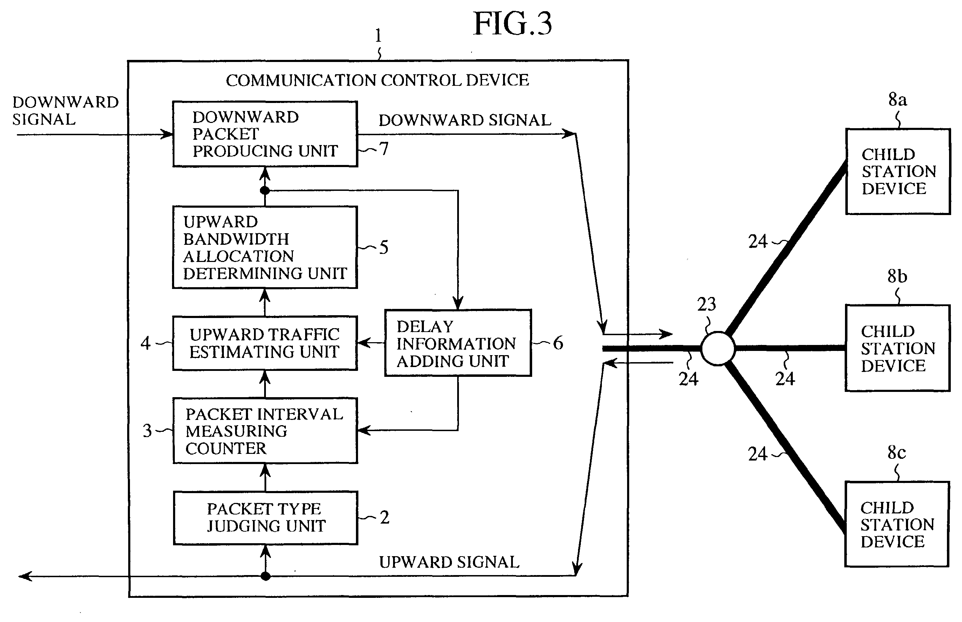

Fig. 3 is a block diagram showing the configuration of a communication system according to a sixth embodiment of the present invention.

In Fig. 3, 1 indicates a communication control device denoting a data communicating device. 8a, 8b and 8c indicate a plurality of child station devices respectively denoting a data outputting device. The child station devices 8a, 8b and 8c are connected with the communication control device 1 through the multiplexing-demultiplexing unit 23 and the transmission medium 24, and the child station devices 8a, 8b and 8c receive data from a plurality of subscribers (not shown) according to contracts with the subscribers.

In each child station device, a plurality of upward information packets having normal information (or valid data) and a plurality of empty packets having invalid information (or invalid data) are arranged as upward packets in slots of an upward signal in which the child station device is allowed to arrange the upward packets, and the upward packets output from the child station devices 8a to 8c are multiplexed with each other in the multiplexing- demultiplexing unit 23 and are sent to the communication control device 10 as an upward signal. In this case, the slots of the upward signal are partitioned into a plurality of slot blocks serially arranged in the upward signal. Each slot block in the upward signal is composed of one slot or a plurality of slots and is called an upward transmission bandwidth control frame in this specification. The upward transmission bandwidth control frames in the upward signal have the same slot length, and the outputting of upward packets admitted to each child station device is controlled in each upward transmission bandwidth control frame.

In the communication control device 1, 2 indicates a packet type judging unit for judging whether each upward packet of the upward signal sent from the child station devices 8a to 8c is a type of upward information packet or a type of empty packet and outputting a judging result as packet type information.

3 indicates a packet interval measuring counter (or an upward traffic measuring unit) for receiving transmission schedule information with delay time (or identification information) of each child station device from a delay information adding unit, receiving the packet type information from the packet type judging unit 2, identifying each child station device as a child station device, from which the upward packet currently received in the packet type judging unit 2 is output, according to the transmission schedule information with delay time, and measuring both an interval (called an upward information packet interval) of each pair of upward information packets sent from one identified child station device and the number of empty packets, which are sent from the identified child station device and are arranged between each pair of upward information packets sent from the identified child station device, according to the packet type information for each identified child station device. That is, the upward information packets sent from each identified child station device are arranged at upward information packet intervals.

4 indicates an upward traffic estimating unit for estimating traffic characteristics in a traffic volume of upward information packets sent from each child station device according to information of the upward information packet intervals and information of the number of empty packets measured in the packet interval measuring counter 3.

5 indicates an upward bandwidth allocation determining unit (including an upward packet output permission instruction producing unit) for determining an upward transmission bandwidth allocated to each child station device according to the traffic characteristic estimated result of the upward traffic estimating unit 4, determining the allocation of usable slots of each upward transmission bandwidth control frame to each child station device according to the upward transmission bandwidth allocated to the child station device to allow the child station device output upward packets arranged in the usable slots at equal intervals to the communication control device 1, and producing an upward packet output permission instruction indicating the allocation of the usable slots for each child station device. The upward packet output permission instruction allows each child station device to output the upward packet every prescribed slots in each upward transmission bandwidth control frame.

6 indicates a delay information adding unit (or an identification information producing unit) for adding delay information to transmission schedule information for each child station device to produce the schedule information with delay time (or identification information) and sending the schedule information with delay time to both the packet interval measuring counter 3 and the upward traffic estimating unit 4. The transmission schedule information denotes the upward packet output permission instruction produced in the upward bandwidth allocation determining unit 5. The delay information of each child station device indicates a delay time from the sending of the upward packet output permission instruction performed by the communication control device 1 to the arrival of upward packets sent from the child station device in response to the upward packet output permission instruction, and the delay time is obtained by actually measuring a transmission time between the communication control device 1 and the child station device. Each child station device, which outputs upward packets currently received in the communication control device 1 after the passage of a delay time from the sending of the upward packet output permission instruction, is identified in the packet interval measuring counter 3 according to the transmission schedule information of the child station device and the delay information of the child station device. The delay time of each child station device is held in the delay information adding unit 6 in advance.

7 indicates a downward packet producing unit (or an upward packet output permission instruction sending unit) for producing an output permission informing packet having the upward packet output permission instruction of each child station device and inserting the output permission informing packets directed to the child station devices into a downward signal.

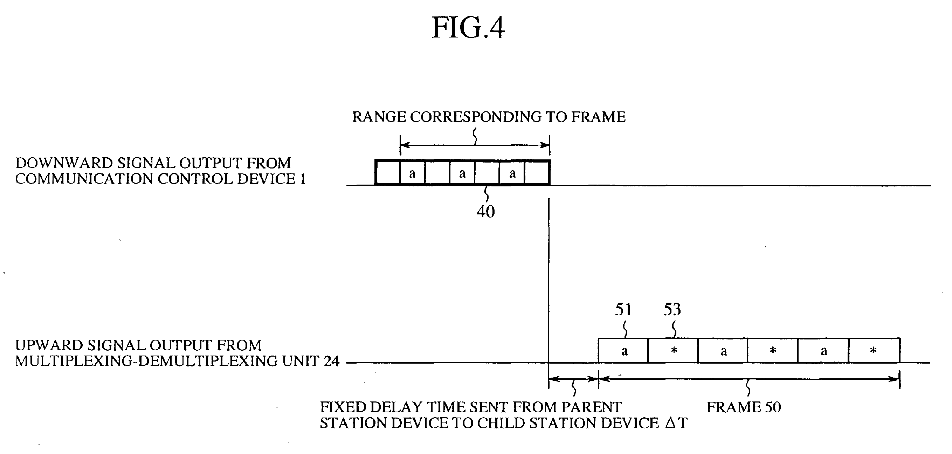

Fig. 4 shows an example of a downward signal and an upward signal in the communication system shown in Fig. 3 in cases where the upward transmission bandwidth allocated to each child station device is controlled in each upward transmission bandwidth control frame of the upward signal.

In Fig. 4, 40 indicates one upward packet output permission instruction which is arranged in a downward packet of a downward signal and is directed to a child station device. 50 indicates an upward transmission bandwidth control frame composed of a plurality of slots of an upward signal. 51 indicates a plurality of upward information packets sent from the child station device in response to the upward packet output permission instruction 40, and the upward information packets 51 are arranged in each upward transmission bandwidth control frame 50. 53 indicates a plurality of upward information packets sent from another child station device.

In this example shown in Fig. 4, the upward packet output permission instruction 40 of a downward packet is arranged in a downward signal so as to make one child station device arrange three upward information packets 51 in three usable slots every other slot in each upward transmission bandwidth control frame 50. In this case, the upward information packets 51 are sent to the communication control device 1 at the equal upward information packet intervals of two packets.

Next, an operation of the communication system shown in Fig. 3 will be described below.

In the communication control device 1 functioning as a parent station device, in the upward bandwidth allocation determining unit 5, an upward transmission bandwidth control frame having a prescribed frame length is initially determined, an upward transmission bandwidth is initially allocated to each child station device. For example, the whole transmission bandwidth of the transmission medium 24 is equally allocated among the child station devices 8a to 8c or is allocated among the child station devices 8a to 8c in proportional to a minimum transmission bandwidth of each child station device. The minimum transmission bandwidth of each child station device is determined according to a contract with the child station device. Thereafter, in the upward bandwidth allocation determining unit 5, an upward transmission bandwidth allocated to each child station device is determined according to the traffic characteristic estimated result of the upward traffic estimating unit 4, the allocation of usable slots of each upward transmission bandwidth control frame to each child station device is determined according to the upward transmission bandwidth allocated to the child station device, and an upward packet output permission instruction indicating the allocation of the usable slots for each child station device is produced. Therefore, each child station device is allowed by the upward packet output permission instruction to output upward packets arranged in the usable slots at equal intervals to the communication control device 1. Also, each child station device is allowed by the upward packet output permission instruction to output the upward packet every prescribed slots (for example, every two slots or every four slots).

Thereafter, in the downward packet producing unit 7, an output permission informing packet having the upward packet output permission instructions is produced for each child station device, and the output permission informing packets directed to the child station devices 8a to 8c are inserted into downward packets of a downward signal and are simultaneously sent to the child station devices 8a to 8c.

Thereafter, in each of the child station devices 8a to 8c, the output permission informing packet directed to the child station device is received, and the upward packet output permission instruction is extracted from the output permission informing packet. The upward packet output permission instruction indicates positions of usable slots arranged at equal intervals in each upward transmission bandwidth control frame of an upward signal, and the upward packet output permission instruction allows the child station device to output upward packets arranged in the usable slots to the communication control device 1.

Therefore, in cases where the child station device has an appreciable amount of valid information to be output to the communication control device 1, many upward information packets having the valid information are arranged as upward packets in usable slots of each upward transmission bandwidth control frame of an upward signal. Also, in cases where the child station device has a small amount of valid information to be output to the communication control device 1, a small number of upward information packets having the valid information are arranged as upward packets in usable slots of each upward transmission bandwidth control frame, and empty packets having invalid information are arranged as upward packets in the other usable slots of each upward transmission bandwidth control frame. The upward packets are output to the communication control device 1 so as to make the communication control device 1 receive the upward packets after the delay time of the child station device from the sending of the upward packet output permission instruction. The upward packets of the child station device are sometimes output at a burst. Thereafter, the upward packets output at a burst from the child station devices 8a to 8c are multiplexed in the multiplexing-demultiplexing unit 23 to an upward signal, and the upward signal is sent to the communication control device 1.

In the communication control device 1, the upward signal of the child station devices 8a to 8c is received, and it is judged in the packet type judging unit 2 whether each upward packet sent from the child station devices 8a to 8c is a type of upward information packet or a type of empty packet. The packet type information indicating the type of each upward packet is sent to the packet interval measuring counter 3.

Also, in the delay information adding unit 6, a transmission schedule of upward packets in each upward transmission bandwidth control frame is received from the upward bandwidth allocation determining unit 5. The transmission schedule of each child station device is indicated by the upward packet output permission instruction for the child station device, and the delay time of each child station device is added to the corresponding transmission schedule. Information of the transmission schedule with the delay time (or identification information) of each child station device is sent to the packet interval measuring counter 3.

In the packet interval measuring counter 3, each child station device, from which a plurality of upward information packets and a plurality of empty packets currently judged in the packet type judging unit 2 are output, is identified according to the transmission schedule information with the delay time (or identification information). Thereafter, an upward information packet interval of each pair of upward information packets sent from one identified child station device is measured according to the packet type information sent from the packet type judging unit 2 for each identified child station device, and the number of empty packets, which are output from one identified child station device and are arranged between each pair of upward information packets output from the identified child station device, is counted according to the packet type information for each identified child station device. That is, the upward information packets of each identified child station device is arranged at the upward information packet intervals in each upward transmission bandwidth control frame. Information of the upward information packet intervals and information of the number of empty packets are obtained in the packet interval measuring counter 3 are sent to the upward traffic estimating unit 4.

In the upward traffic estimating unit 4, traffic characteristics in a traffic volume of upward packets sent from each child station device in a future time are estimated according to information of the upward information packet intervals in the upward transmission bandwidth control frame, information of the number of empty packets between each pair of upward information packets and the schedule information of the upward packet output permission instruction received from the delay information adding unit 6.

For example, in cases where no empty packet is output from one child station device in the upward transmission bandwidth control frame, it is estimated that an upward transmission bandwidth allocated to the child station device is insufficient.

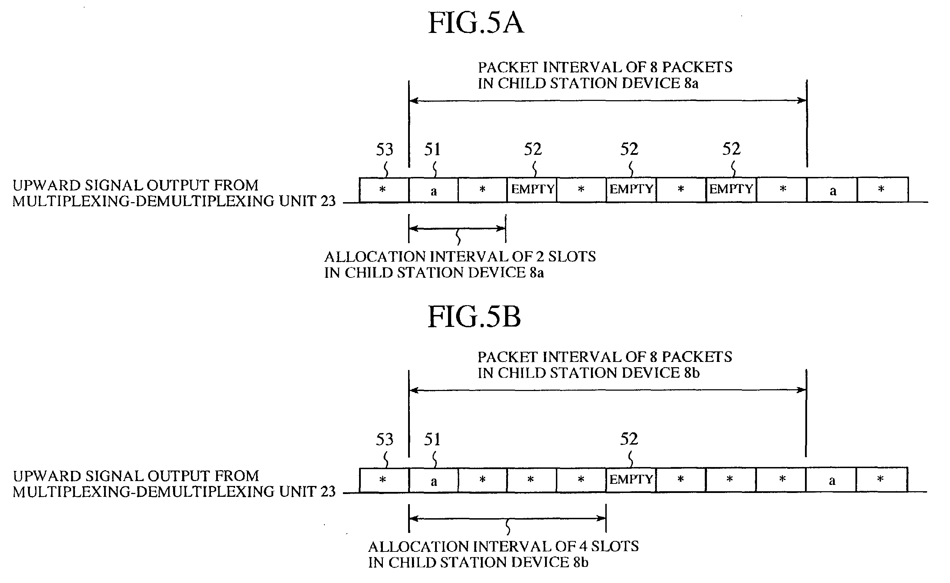

Also, another estimation example is described with reference to Fig. 5A and Fig. 5B.

Fig. 5A shows an upward information packet interval of upward information packets sent from a first child station device in cases where the number of usable slots allocated to the first child station device is large, and Fig. 5B shows an upward information packet interval of upward information packets sent from a second child station device in cases where the number of usable slots allocated to the second child station device is small.

As shown in Fig. 5A and Fig. 5B, even though the upward information packet interval of upward packets output from a first child station device in a block of the upward transmission bandwidth control frame is the same as that output from a second child station device in the block of the upward transmission bandwidth control frame, in cases where the number of usable slots allocated to the first child station device in the upward transmission bandwidth control frame differs from that allocated to the second child station device in the upward transmission bandwidth control frame, there is a case where the number of empty packets of the first child station device in the upward transmission bandwidth control frame differs from that of the second child station device in the upward transmission bandwidth control frame.

For example, in cases where the number of empty packets of a first child station device in a block of the upward transmission bandwidth control frame is larger than that of a second child station device in the block of the upward transmission bandwidth control frame, it is estimated that an upward transmission bandwidth allocated to the first child station device is more sufficient than that allocated to the second child station device, or it is estimated that a probability of a burst traffic in the first child station device is higher than that in the second child station device. Also, in cases where the number of empty packets of the first child station device in the block of the upward transmission bandwidth control frame is small, it is estimated that an upward transmission bandwidth allocated to the first child station device is insufficient.

Also, in cases where upward packets are, for example, sent from one child station device at the equal upward information packet intervals in the upward transmission bandwidth control frame, even though empty cells exist in the upward packets, it is estimated that the upward packets are output from the child station device at a fixed transfer rate.

Also, for example, in cases where one child station device successively outputs upward information packets in response to upward packet output permission instruction in a block of an upward transmission bandwidth control frame without outputting any empty packets on condition that the child station device successively outputs empty packets in another block of the upward transmission bandwidth control frame without outputting any upward information packets in response to other upward packet output permission instruction, it is estimated that the child station device outputs the upward information packets at a burst traffic. In addition, an upward information packet interval in the upward information packets output at a burst traffic is measured, and it is judged in the upward traffic estimating unit 4 whether or not the upward information packets output at a burst traffic has periodicity.

Also, for example, in cases where an upward information packet interval of upward information packets output from one child station device is gradually shortened, it is estimated that a traffic volume of the upward information packets output from the child station device is gradually increased.

Also, for example, in cases where an upward information packet interval of upward information packets output from one child station device is gradually lengthened, it is estimated that a traffic volume of the upward information packets output from the child station device is gradually decreased.

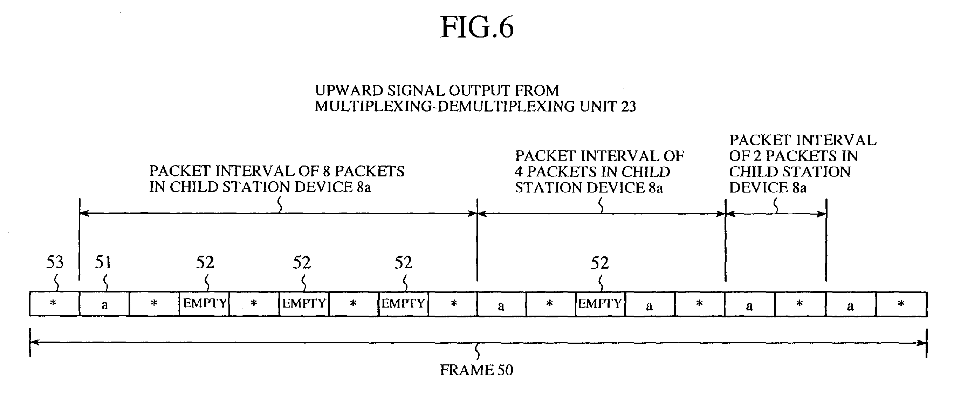

Fig. 6 shows an output example of upward packets of one child station device in cases where a traffic volume of the upward packets is monotonously increased.

In Fig. 6, 51 indicates upward information packets output from a first child station device, 52 indicates empty packets output from the first child station device, and 53 indicates upward packets output from a second child station device. In this example, the upward information packet interval of the upward information packets 51 is longer in the first half of the upward transmission bandwidth control frame 50, and the upward information packet interval of the upward information packets 51 is shortened in the latter half of the upward transmission bandwidth control frame 50. Because the communication control device 1 allows the first child station device to arrange the upward information packets 51 at the equal intervals of two upward packets, it is estimated in the upward traffic estimating unit 4 that a traffic volume of the upward information packets output from the child station device is increased.

In the upward bandwidth allocation determining unit 5, it is judged whether or not it is required to change the upward transmission bandwidth allocated to each child station device. This judgment is performed according to traffic characteristics of upward information packets estimated in the upward traffic estimating unit 4 for each child station device. In cases where the change of the upward transmission bandwidth allocated to each child station device is necessary, the upward transmission bandwidth allocated to each child station device is again determined according to the traffic characteristics of upward information packets estimated in the upward traffic estimating unit 4 while considering a ratio of the upward transmission bandwidth of each child station device to a sum of the upward transmission bandwidths of the other child station devices, the upward packet output permission instruction indicating the allocation of usable slots determined is changed according to the upward transmission bandwidth allocated to each child station device, the changed upward packet output permission instruction is given to each child station device so as to make the child station device output upward packets at equal intervals in the upward transmission bandwidth control frame in response to the upward packet output permission instruction. The upward packet output permission instructions for the child station devices 8a to 8c are multiplexed with each other in the downward signal.

Also, in cases where it is impossible to estimate traffic characteristics in a traffic volume of upward information packets of one child station device by measuring the upward information packet interval in the upward transmission bandwidth control frame, information indicating failure in the estimation of traffic characteristics in the traffic volume of the child station device is sent to the upward bandwidth allocation determining unit 5. In the upward bandwidth allocation determining unit 5, a length of the upward transmission bandwidth control frame for the child station device is changed. For example, in cases where no upward information packet is received from a child station device in the communication control device 1 but empty packets sent from the child station device are received, an upward transmission bandwidth control frame for the child station device corresponds to a block of slots of the upward signal in which no upward information packet is arranged by the child station device having a burst traffic, or the child station device outputs upward information packets at a transfer rate lower than the upward transmission bandwidth allocated to the child station device. Therefore, the upward transmission bandwidth control frame for the child station device is lengthened. That is, the number of slots in the upward transmission bandwidth control frame is increased.

In the downward packet producing unit 7, an output permission informing packet having the upward packet output permission instruction is produced for each child station device, and the output permission informing packets directed to the child station devices are arranged in downward information packets of a downward signal. The output permission informing packets are simultaneously sent to the child station devices 8a to 8c, and the same operation as that described before is performed in each child station device.

As is described above, in the sixth embodiment, an upward transmission bandwidth control frame is defined to control an upward transmission bandwidth allocated for each child station device, an upward packet output permission instruction indicating the allocation of usable slots in each upward transmission bandwidth control frame is determined according to the upward transmission bandwidth allocated to each child station device, the upward packet output permission instruction is given to the child station device so as to make the child station device output upward packets at equal intervals in each upward transmission bandwidth control frame in response to the upward packet output permission instruction, the downward signal having the upward packet output permission instructions of the child station devices 8a to 8c are sent to the child station devices 8a to 8c, an upward information packet interval of upward information packets sent from each child station device in response to the upward packet output permission instruction is measured in the communication control device 1, the traffic characteristics in the child station devices 8a to 8c are estimated, and the allocation of the upward transmission bandwidth to each child station device is changed according to the estimated traffic characteristics in the child station devices 8a to 8c. Accordingly, a series of traffic volumes ranging from a traffic volume of upward information packets in the first half of an upward transmission bandwidth control frame in a past time to a traffic volume of upward information packets in the latter half of an upward transmission bandwidth control frame in a current time can be grasped, and traffic characteristics in the traffic volume of the upward information packets can be reliably estimated for each child station device.

Also, in cases where it is difficult to estimate traffic characteristics in the traffic volume of the upward information packets, a length of the upward transmission bandwidth control frame is changed. Therefore, traffic characteristics in the traffic volume of the upward information packets can be estimated. Accordingly, an upward transmission bandwidth can be properly and stably allocated to each child station device without being influenced on a traffic characteristic (or a time-wise change) of upward information packets sent from the child station device.

### EMBODIMENT 7

In the sixth embodiment, the upward packet output permission instruction indicating the allocation of usable slots in an upward signal is determined according to the upward transmission bandwidth allocated to each child station device, the upward packet output permission instruction is given to the child station device so as to make the child station device output upward packets at equal intervals in the upward transmission bandwidth control frame in response to the upward packet output permission instruction, an upward information packet interval of each pair of upward information packets sent from the child station device and the number of empty packets arranged between the pair of upward information packets are measured, traffic characteristics of the upward information packets is estimated, and the allocation of upward transmission bandwidth among the child station devices 8a to 8c is changed according to the estimated traffic characteristics.

However, in the seventh embodiment, to give an upward packet output permission instruction, which properly correspond to a burst traffic in a child station device, to the child station device, an upward packet output permission instruction indicating the allocation of usable slots in an upward signal is determined according to an upward transmission bandwidth allocated to each child station device, the upward packet output permission instruction is given to the child station device so as to make the child station device possible to output upward packets at unequal intervals in an upward transmission bandwidth control frame in response to the upward packet output permission instruction, an upward information packet interval of each pair of upward information packets sent from the child station device, the number of empty packets arranged between each pair of upward information packets and an empty packet interval of each pair of empty packets sent from the child station device are measured to estimate traffic characteristics of the upward information packets, and the allocation of upward transmission bandwidth among the child station devices 8a to 8c is changed according to the estimated traffic characteristics.

In an example case, a group of upward information packets of usable slots successively positioned in the upward signal is intermittently output from a specific child station device many times at a burst, and an upward transmission bandwidth allocated to the specific child station device is changed according to traffic characteristics estimated for the child station device.

In detail, an upward transmission bandwidth control frame is initially set to a prescribed length, an upward transmission bandwidth set to a prescribed value is initially allocated to each child station device, and an upward packet output permission instruction indicating the allocation of usable slots in an upward signal is determined according to the upward transmission bandwidth of each child station device, and the upward packet output permission instruction is initially given to the child station device so as to make the child station device output upward packets at equal intervals in the upward transmission bandwidth control frame in response to the upward packet output permission instruction.

In cases where the number of upward packets allocated to the specific child station device is sufficiently large to make the specific child station output upward information packets at a burst, empty packets exist in the upward packets output from the specific child station, the empty packets are received in the communication control device 1, and an empty packet interval of each pair of empty packets is measured in addition to the measurement of upward information packet intervals and the number of empty packets. Therefore, a periodic burst traffic in the upward packets output from the specific child station is estimated in the upward traffic estimating unit 4.

Thereafter, in the upward bandwidth allocation determining unit 5, an upward transmission bandwidth to be allocated to the specific child station is determined according to the traffic characteristics estimated in the upward traffic estimating unit 4, and an upward packet output permission instruction indicating the allocation of usable slots in an upward signal is determined according to the upward transmission bandwidth allocated to the specific child station device, and the upward packet output permission instruction is given to the child station device so as to make the specific child station device repeatedly output a series of upward information packets of slots successively positioned at a burst in the upward transmission bandwidth control frame in response to the upward packet output permission instruction.

The other operation is the same as that described in the sixth embodiment.

As is described above, in the seventh embodiment, an upward transmission bandwidth control frame is defined to control an upward transmission bandwidth allocated for each child station device, an upward packet output permission instruction indicating the allocation of usable slots in an upward signal is determined according to the upward transmission bandwidth allocated to each child station device, and the upward packet output permission instruction is given to the child station device so as to make the child station device possible to output upward packets at unequal intervals in the upward transmission bandwidth control frame in response to the upward packet output permission instruction. Therefore, even though a series of upward information packets is intermittently output at a periodic burst traffic from a specific child station device at a frequency shorter than the upward transmission bandwidth control frame, the upward transmission bandwidth can be effectively allocated among the child station devices 8a to 8c without the traffic characteristics in the specific child station device influencing on those in the other child station devices.

### EMBODIMENT 8

In the seventh embodiment, because upward packet output permission instruction is given to each child station device so as to make the child station device possible to output upward packets at unequal intervals in the upward transmission bandwidth control frame in response to the upward packet output permission instruction, a specific child station device can output upward information packets at a burst traffic at a frequency shorter than the length of the upward transmission bandwidth control frame. In the eight embodiment, traffic characteristics of a specific child station device are estimated by giving an upward packet output permission instruction to the specific child station device so as to make the specific child station device possible to output upward packets at unequal intervals in the upward transmission bandwidth control frame in response to the upward packet output permission instruction.

In detail, the estimation of traffic characteristics in the specific child station device is temporarily stopped, the number of usable slots allocated to the specific child station device is temporarily increased on condition that no contracts with the other child station devices are violated, upward packets output from the specific child station device are arranged in usable slots successively positioned in an upward signal as many as possible, and upward information packets output from the specific child station device are measured. Therefore, traffic characteristics in the specific child station device can be estimated.

As is described above, in the eighth embodiment, traffic characteristics of a specific child station device are estimated by giving an upward packet output permission instruction to the specific child station device so as to make the specific child station device possible to output upward packets at unequal intervals in the upward transmission bandwidth control frame in response to the upward packet output permission instruction. Therefore, even though it is difficult to estimate traffic characteristics in a specific child station device according to a normal operation, traffic characteristics in the specific child station device can be reliably estimated. Accordingly, the upward transmission bandwidth can be effectively allocated among the child station devices 8a to 8c without the traffic characteristics in the specific child station device influencing on those in the other child station devices.

### EMBODIMENT 9

In the seventh and eighth embodiments, an upward packet output permission instruction is given to each child station device so as to make the child station device possible to output upward packets at unequal intervals in each fixed upward transmission bandwidth control frame in response to the upward packet output permission instruction. In the ninth embodiment, in cases where an upward transmission bandwidth allocated to a specific child station device in a past time is drastically changed in a current time according to the traffic estimated result of the upward traffic estimating unit 4, to stably change an upward transmission bandwidth allocated to the specific child station device, an upward packet output permission instruction is given to the specific child station device so as to make the specific child station device possible to output upward packets at unequal intervals in a transition upward transmission bandwidth control frame in response to the upward packet output permission instruction.

In detail, in cases where an upward transmission bandwidth allocated to a specific child station device in a past time is drastically changed in a current time according to estimated traffic characteristics in the child station devices 8a to 8c, there is a possibility that the upward transmission bandwidth is not stably allocated to the specific child station device. To smoothly change the upward transmission bandwidth allocated to the specific child station device, an upward packet output permission instruction is given to the specific child station device so as to make the specific child station device possible to output upward packets at unequal intervals in response to the upward packet output permission instruction, and the upward transmission bandwidth control frame set in the past time is temporarily changed to a transition upward transmission bandwidth control frame in the current time so as to gradually change the upward information packet interval of upward information packets output from the specific child station device in the transition upward transmission bandwidth control frame.

Therefore, the upward information packet interval is gradually changed in the transition upward transmission bandwidth control frame to smoothly change the upward transmission bandwidth allocated to the specific child station device.

It is applicable that a length of the transition upward transmission bandwidth control frame be changeable to set the transition upward transmission bandwidth control frame to a length appropriate to the traffic characteristics of the specific child station device.

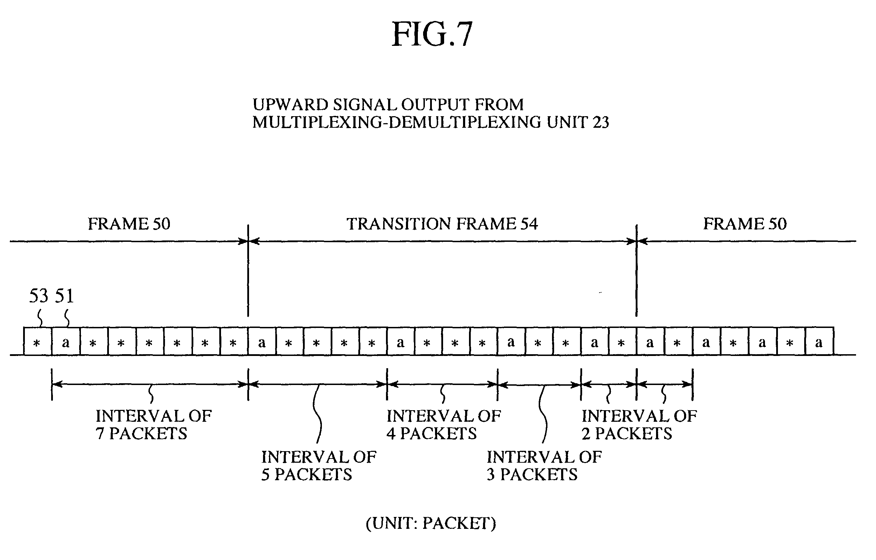

Fig. 7 shows a transition upward transmission bandwidth control frame inserted into upward transmission bandwidth control frames to gradually change the upward information packet interval according to the ninth embodiment.

As shown in Fig. 7, in cases where an upward transmission bandwidth allocated to a specific child station device is drastically changed, an upward packet output permission instruction given to the specific child station device so as to make the specific child station device output upward packets at the equal intervals of 7 packets in a upward transmission bandwidth control frame 50 is drastically changed to an upward packet output permission instruction given to the specific child station device so as to make the specific child station device output upward packets at the equal intervals of 2 packets in the upward transmission bandwidth control frame 50. In this case, a transition upward transmission bandwidth control frame 54 corresponding to a current time is inserted into the upward transmission bandwidth control frames 50, and an upward packet output permission instruction is given to the specific child station device so as to make the specific child station device possible to output upward packets at unequal intervals in the transition upward transmission bandwidth control frame 54. Therefore, the upward information packet interval of upward information packets in the transition upward transmission bandwidth control frame 54 is gradually changed from the interval of 5 packets to the interval of 2 packets, and the upward transmission bandwidth allocated to the specific child station device is smoothly changed.

As is described above, a transition upward transmission bandwidth control frame 54 of a changeable length is inserted into the upward transmission bandwidth control frames 50 of a fixed length by giving an upward packet output permission instruction to a specific child station device so as to make the specific child station device possible to output upward packets at unequal intervals in response to the upward packet output permission instruction. Therefore, even though an upward transmission bandwidth allocated to the specific child station device is drastically changed, the upward transmission bandwidth allocated to the specific child station device can be smoothly changed, and the upward transmission bandwidth allocated to the specific child station device can be stably controlled independent of the traffic volumes of the other child station devices.

In the sixth to ninth embodiments, the same upward transmission bandwidth control frame is set for the child station devices 8a to 8c. However, because there is a case where the upward information packet interval in one child station device considerably differs from that in another child station device, it is applicable that an upward transmission bandwidth control frame is set for each child station device.

Also, in the sixth to ninth embodiments, the communication control device (or data communication device) according to the present invention is described. However, a the communication control method (or a data communication method) using the communication control device (or the data communication device) can be performed according to the procedure described above.

### EMBODIMENT 10

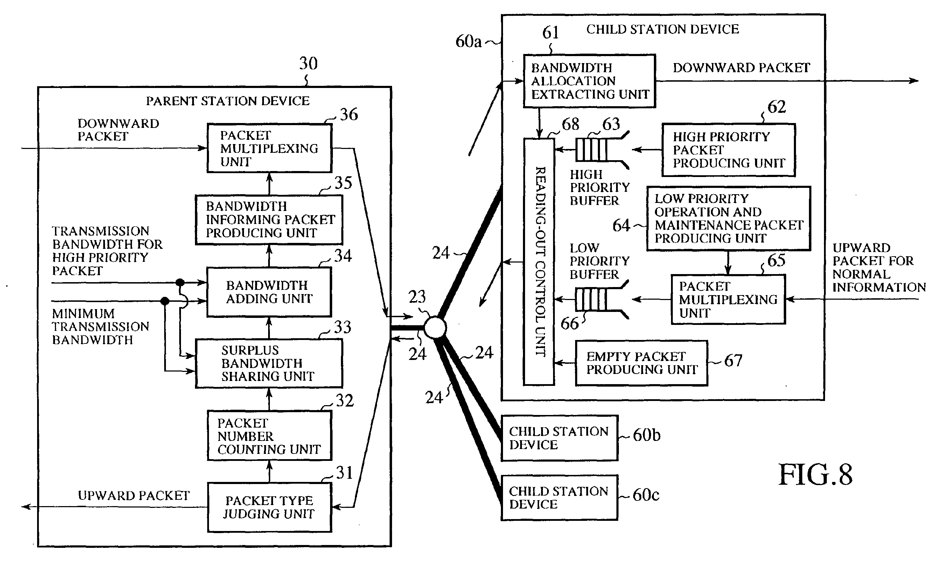

Fig. 8 is a block diagram showing the configuration of a communication system comprising a parent station device and a plurality of child station devices according to a tenth embodiment of the present invention.

In Fig. 8, 30 indicates a parent station device. 60a, 60b and 60c indicate a plurality of child station devices connected with the parent station device 30 through the multiplexing-demultiplexing unit 23 and the transmission medium 24.

In the child station devices 60a, 60b and 60c, a type of high priority packets such as operation and maintenance packets, a type of upward information packets and a type of empty packets are used. Each high priority packet is used to transfer alarm information having high priority to the parent station device 30. Each upward information packet has normal information. Low priority operation and maintenance packets having low priority operation and maintenance information are multiplexed with the upward information packets. A plurality of upward packets composed of the high priority packets, the upward information packets multiplexed with the low priority operation and maintenance packets and the empty packets are sent from the child station devices 60a to 60c, pass through the transmission medium 24 and are multiplexed in the multiplexing-demultiplexing unit 23 to produce an upward signal, and the upward signal is sent to the parent station device 30 through the transmission medium 24.

In the parent station device 30, 31 indicates a packet type judging unit for judging whether each upward packet included in the upward signal currently received is a type of high priority packet, a type of upward information packet or low priority operation and maintenance packet or a type of empty packet.

32 indicates a packet number counting unit for counting the number of high priority packets, the number of upward information packets multiplexed with low priority operation and maintenance packets and the number of empty packets of which the types are judged in the packet type judging unit 31. The counting in the packet number counting unit 32 is performed for each child station device.

33 indicates a surplus bandwidth sharing unit for calculating a surplus transmission bandwidth by subtracting both a sum of minimum transmission bandwidths allocated to the child station devices 60a, 60b and 60c and a sum of high priority packet transmission bandwidths allocated to the child station devices 60a, 60b and 60c from the whole upward transmission bandwidth of the transmission medium 24 (that is, the whole transmission bandwidth usable for upward packets passing through the transmission medium 24) and sharing the surplus transmission bandwidth among the child station devices 60a, 60b and 60c according to the number of upward information packets multiplexed with low priority operation and maintenance packets or the number of empty packets counted in the packet number counting unit 32 for each child station device.

The high priority packet transmission bandwidth is initially allocated to each child station device to allow the child station device to send high priority packets in the high priority packet transmission bandwidth.

34 indicates a bandwidth adding unit for adding both the minimum transmission bandwidth and the high priority packet transmission bandwidth of each child station device to a partial surplus transmission bandwidth given to the child station device in the surplus bandwidth sharing unit 33 to calculate an upward transmission bandwidth allocated to each child station device.

35 indicates a bandwidth informing packet producing unit for producing a bandwidth informing packet which includes information of the upward transmission bandwidth allocated to each child station device in the bandwidth adding unit 34.

36 indicates a packet multiplexing unit for multiplexing the bandwidth informing packets directed to the child station devices 60a to 60c with downward packets to produce a downward signal.

In each of the child station devices 60a to 60c, 61 indicates a bandwidth allocation extracting unit for detecting the bandwidth informing packet directed to the child station device from the downward signal and extracting information of the upward transmission bandwidth allocated to the child station device from the bandwidth informing packet.

62 indicates a high priority packet producing unit for producing a type of high priority packets such as a high priority operation and maintenance packet. Each high priority packet has high priority information like alarm information.

63 indicates a high priority buffer for storing the high priority packets produced in the high priority packet producing unit 62.

64 indicates a low priority operation and maintenance packet producing unit for producing a type of low priority operation and maintenance packets. The priority of the low priority operation and maintenance packets is the same as that of a type of upward information packets having normal information.

65 indicates a packet multiplexing unit for multiplexing the upward information packets having normal information with the low priority operation and maintenance packets produced in the low priority operation and maintenance packet producing unit 64.

66 indicates a low priority buffer for storing the upward information packets multiplexed with the low priority operation and maintenance packets.

67 indicates an empty packet producing unit for producing a type of empty packet in cases where no upward packet is stored in the high priority buffer 63 or the low priority buffer 66 at an upward packet output time of an upward packet in the child station device.

68 indicates a reading-out control unit for determining an upward packet output time of an upward packet according to the upward transmission bandwidth which is allocated to the child station device and is sent from the bandwidth allocation extracting unit 61, preferentially sending a high priority packet at the upward packet output time in cases where the high priority packet is stored in the high priority buffer 63, sending an upward information packet at the upward packet output time in cases where the upward information packet is stored in the low priority buffer 66 on condition that no high priority packet is stored in the high priority buffer 63 and sending an empty packet produced in the empty packet producing unit 67 at the upward packet output time in cases where no high priority packet is stored in the high priority buffer 63 and no upward information packet is stored in the low priority buffer 66.

Next, an operation of the communication system shown in Fig. 8 will be described below.

In the surplus bandwidth sharing unit 33 of the parent station device 30, a surplus transmission bandwidth is initially calculated by subtracting both a sum of minimum transmission bandwidths allocated to the child station devices 60a, 60b and 60c and a sum of high priority packet transmission bandwidths allocated to the child station devices 60a, 60b and 60c from the whole upward transmission bandwidth of the transmission medium 24. The minimum transmission bandwidth and the high priority packet transmission bandwidth for each child station device are, for example, determined according to a contract with the child station device. Thereafter, the surplus transmission bandwidth is initially shared among the child station devices 60a, 60b and 60c. In a start operation of the communication system, the surplus transmission bandwidth is, for example, equally shared among the child station devices 60a to 60c or is shared among the child station devices 60a to 60c in proportional to the minimum transmission bandwidth of each child station device.

Thereafter, in the bandwidth adding unit 34, the minimum transmission bandwidth and the high priority packet transmission bandwidth of each child station device are added to a partial surplus transmission bandwidth given to the child station device in the surplus bandwidth sharing unit 33 to obtain an upward transmission bandwidth allocated to the child station device.

In the bandwidth informing packet producing unit 35, a bandwidth informing packet is produced for each child station device. In each bandwidth informing packet, information of the upward transmission bandwidth allocated to one child station device in the bandwidth adding unit 34 is arranged. Thereafter, in the packet multiplexing unit 36, the bandwidth informing packets directed to the child station devices 60a to 60c are multiplexed with downward packets to produce a downward signal. Thereafter, the bandwidth informing packets multiplexed in the downward signal are sent to the child station devices 60a to 60c through the multiplexing-demultiplexing unit 23 and the transmission medium 24.

In each of the child station devices 60a to 60c, when the downward signal is sent to the child station device, the downward packets including the bandwidth informing packets multiplexed with the downward packets are received in the child station device, it is checked whether or not each downward packet is directed to the child station device, and downward packets directed to the child station device are obtained in the child station device. Thereafter, in the bandwidth allocation extracting unit 61, the bandwidth informing packet directed to the child station device is selected from the downward packets directed to the child station device, and information of the upward transmission bandwidth allocated to the child station device is extracted from the bandwidth informing packet.

Also, in the high priority packet producing unit 62, high priority packets of high priority operation and maintenance information are produced. Because it is not desired to delay the sending of each high priority operation and maintenance information or to discard each high priority operation and maintenance information, the high priority packets produced in the unit 62 take high priority of other types of packets. For example, alarm information set to the high priority is arranged in the high priority packets. Thereafter, each high priority packet is stored in the high priority buffer 63 until an upward packet outputting time.

Also, in the low priority operation and maintenance packet producing unit 64, a type of low priority operation and maintenance packets are produced. The priority of the low priority operation and maintenance packets is the same as that of a type of upward information packets having normal information. The upward information packets having normal information are multiplexed with the low priority operation and maintenance packets in the packet multiplexing unit 65, and each of the upward information packets multiplexed with the low priority operation and maintenance packets is stored in the low priority buffer 66 until an upward packet outputting time.

Thereafter, in the reading-out control unit 68, the upward transmission bandwidth allocated to the child station device is received from the bandwidth allocation extracting unit 61, and an upward packet output time is repeatedly determined according to the upward transmission bandwidth. Thereafter, each high priority packet is read out from the high priority buffer 63 and is preferentially sent to the parent station device 30 at the upward packet output time. In cases where no high priority packet is stored in the high priority buffer 63 at the upward packet output time, each of the upward information packets multiplexed with the low priority operation and maintenance packets is read out from the low priority buffer 66, and the upward information packet or low priority operation and maintenance packet is sent to the parent station device 30 at the upward packet output time. Also, in cases where no high priority packet corresponding to the upward packet output time is stored in the high priority buffer 63 and no upward information packet or no low priority operation and maintenance packet corresponding to the upward packet output time is stored in the low priority buffer 66, an empty packet produced in the empty packet producing unit 67 is sent to the parent station device 30 at the upward packet output time.

Therefore, the high priority packets, the upward information packets multiplexed with the low priority operation and maintenance packets and the empty packets are sent from the child station devices 60a to 60c to the parent station device 30 as an upward signal.

In the parent station device 30, when the upward packets composed of the high priority packets, the upward information packets multiplexed with the low priority operation and maintenance packets and the empty packets are received, it is judged in the packet type judging unit 31 whether each upward packet included in the upward signal currently received is a type of high priority packet, a type of upward information packet or low priority operation and maintenance packet or a type of empty packet.

Thereafter, in the packet number counting unit 32, the number of high priority packets is counted for each child station device. Also, the number of upward information packets multiplexed with low priority operation and maintenance packets or the number of empty packets is counted for each child station device.

Thereafter, in the surplus bandwidth sharing unit 33, a surplus transmission bandwidth is calculated by subtracting both a sum of minimum transmission bandwidths allocated to the child station devices 60a, 60b and 60c and a sum of high priority packet transmission bandwidths allocated to the child station devices 60a, 60b and 60c from the whole upward transmission bandwidth of the transmission medium 24, and the surplus transmission bandwidth is shared among the child station devices 60a, 60b and 60c according to the number of upward information packets multiplexed with low priority operation and maintenance packets or the number of empty packets counted in the packet number counting unit 32. Therefore, a partial surplus transmission bandwidth is given to each child station device.

Also, it is checked in the surplus bandwidth sharing unit 33 whether or not the number of high priority packets sent from each child station device matches the high priority packet transmission bandwidth initially allocated to the child station device.

Thereafter, in the bandwidth adding unit 34, both the minimum transmission bandwidth and the high priority packet transmission bandwidth of each child station device are added to the partial surplus transmission bandwidth allocated to the child station device in the surplus bandwidth sharing unit 33 to calculate an upward transmission bandwidth allocated to each child station device. In this case, the high priority packet transmission bandwidth of a fixed value is initially allocated to each child station device. However, it is applicable that the high priority packet transmission bandwidth allocated to each child station device be adaptively determined according to the number of high priority packets counted in the packet number counting unit 32.

Thereafter, in the bandwidth informing packet producing unit 35, a bandwidth informing packet having information of the upward transmission bandwidth allocated to each child station device in the bandwidth adding unit 34 is produced. The bandwidth informing packets directed to the child station devices 60a to 60c are multiplexed with downward packets in the packet multiplexing unit 36 to produce a downward signal.

As is described above, in the tenth embodiment, the high priority packet transmission bandwidth is included in the upward transmission bandwidth in the bandwidth adding unit 34 to send the high priority packets taking priority of the upward information packets multiplexed with the low priority operation and maintenance packets from each child station device to the parent station device 30. Therefore, the high priority packet transmission bandwidth determined for the sending of the high priority packets can be always guaranteed. Accordingly, even though an upward transmission bandwidth control is performed to dynamically allocate an upward transmission bandwidth to each child station device, the high priority packets can be reliably sent without any delay or failure in the sending of the high priority packets.

Also, in the tenth embodiment, the high priority packets taking priority of the upward information packets multiplexed with the low priority operation and maintenance packets are preferentially output from each child station device to the parent station device 30 prior to the outputting of the upward information packets multiplexed with the low priority operation and maintenance packets. Accordingly, even though an upward transmission bandwidth control is performed to dynamically allocate an upward transmission bandwidth to each child station device, the high priority packets can be reliably sent without any delay or failure in the sending of the high priority packets.

### EMBODIMRNT 11

In the tenth embodiment, to perform an upward transmission bandwidth control, a method of detecting a communication traffic of upward packets of each child station device in the parent station device 30 is described. However, in the eleventh embodiment, a method of detecting a communication traffic of upward packets of each child station device in the child station device is adopted, a communication traffic informing packet having information of a communication traffic of valid information packets of a child station device is multiplexed with the high priority packet, the communication traffic informing packet and the high priority packet are stored in a high priority buffer, and the communication traffic informing packet and the high priority packet are sent from the child station device to a parent station device.

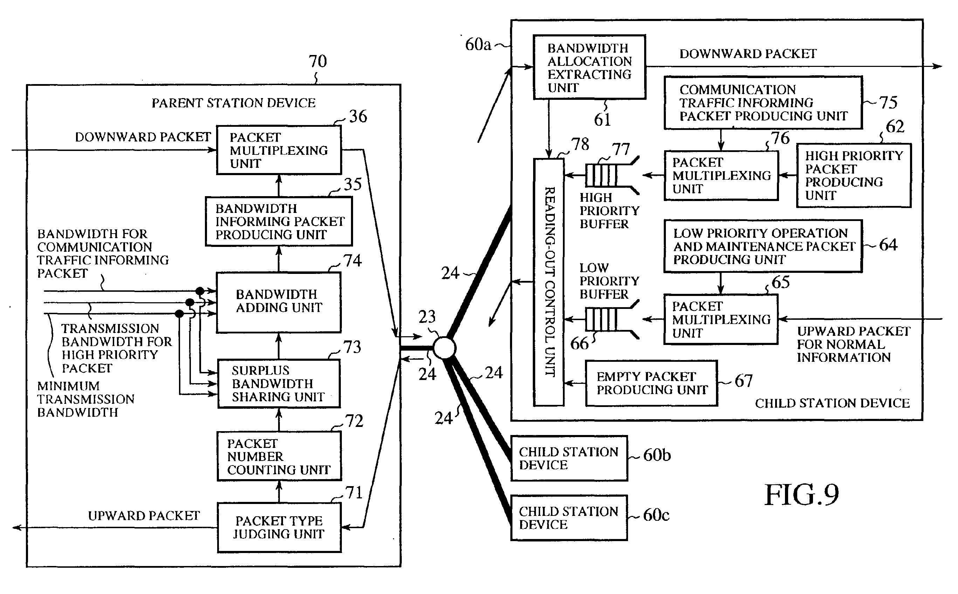

Fig. 9 is a block diagram showing the configuration of a communication system comprising a parent station device and a plurality of child station devices according to an eleventh embodiment of the present invention.

In Fig. 9, 70 indicates a parent station device. 60a, 60b and 60c indicate a plurality of child station devices connected with the parent station device 70 through the multiplexing-demultiplexing unit 23 and the transmission medium 24.

In the child station devices 60a, 60b and 60c, 75 indicates a communication traffic informing packet producing unit for producing a type of communication traffic informing packet having information of a communication traffic of valid information packets sent from the child station device. The high priority packets produced in the high priority packet producing unit 62, the low priority operation and maintenance packets produced in the low priority operation and maintenance packet producing units 64 and the upward information packets are included in the valid information packets.

76 indicates a packet multiplexing unit for multiplexing the communication traffic informing packet produced in the communication traffic informing packet producing unit 75 with the high priority packet produced in the high priority packet producing unit 62.

77 indicates a high priority buffer for storing the communication traffic informing packet and the high priority packet multiplexed with each other.

78 indicates a reading-out control unit for determining an upward packet output time of an upward packet according to the upward transmission bandwidth which is allocated to the child station device and is sent from the bandwidth allocation extracting unit 61, preferentially sending a communication traffic informing packet and a high priority packet multiplexed with each other at the upward packet output time in cases where the communication traffic informing packet and the high priority packet multiplexed with each other are stored in the high priority buffer 77, sending an upward information packet at the upward packet output time in cases where the upward information packet is stored in the low priority buffer 66 on condition that no communication traffic informing packet or no high priority packet is stored in the high priority buffer 77, and sending an empty packet produced in the empty packet producing unit 67 at the upward packet output time in cases where no communication traffic informing packet or no high priority packet is stored in the high priority buffer 77 and no upward information packet is stored in the low priority buffer 66.

Also, in each of the child station devices 60a to 60c, the bandwidth allocation extracting unit 61, the high priority packet producing unit 62, the low priority operation and maintenance packet producing unit 64, the packet multiplexing unit 65, the low priority buffer 66 and the empty packet producing unit 67 are arranged in the same manner as in Fig. 8 of the tenth embodiment.

A plurality of upward packets composed of the communication traffic informing packets, the high priority packets, the upward information packets multiplexed with the low priority operation and maintenance packets and the empty packets are sent from the child station devices 60a to 60c through the transmission medium 24 and are multiplexed in the multiplexing-demultiplexing unit 23 to produce an upward signal, and the upward signal is sent to the parent station device 30 through the transmission medium 24.

In the parent station device 70, 71 indicates a packet type judging unit for judging whether each upward packet included in the upward signal is a type of communication traffic informing packet, a type of high priority packet, a type of upward information packet or low priority operation and maintenance packet or a type of empty packet.

72 indicates a packet number counting unit for counting the number of communication traffic informing packets, the number of high priority packets, the number of upward information packets multiplexed with low priority operation and maintenance packets and the number of empty packets of which the types are judged in the packet type judging unit 71. The counting in the packet number counting unit 72 is performed for each child station device.

73 indicates a surplus bandwidth sharing unit for calculating a surplus transmission bandwidth by subtracting a sum of minimum transmission bandwidths allocated to the child station devices 60a, 60b and 60c, a sum of high priority packet transmission bandwidths allocated to the child station devices 60a, 60b and 60c and a sum of communication traffic informing packet transmission bandwidths allocated to the child station devices 60a, 60b and 60c from the whole upward transmission bandwidth of the transmission medium 24, and sharing the surplus transmission bandwidth among the child station devices 60a, 60b and 60c according to the number of upward information packets multiplexed with low priority operation and maintenance packets or the number of empty packets counted in the packet number counting unit 72. The communication traffic informing packet transmission bandwidth is initially allocated to each child station device to allow the child station device to send communication traffic informing packets in the communication traffic informing packet transmission bandwidth. The high priority packet transmission bandwidth is initially allocated to each child station device to allow the child station device to send high priority packets in the communication traffic informing packet transmission bandwidth.

74 indicates a bandwidth adding unit for adding the minimum transmission bandwidth, the high priority packet transmission bandwidth and the communication traffic informing packet transmission bandwidth of each child station device to a partial surplus transmission bandwidth given to the child station device in the surplus bandwidth sharing unit 73 to calculate an upward transmission bandwidth to be allocated to each child station device.

Next, an operation of the communication system shown in Fig. 9 will be described below.

In the surplus bandwidth sharing unit 73 of the parent station device 70, a surplus transmission bandwidth is initially calculated by subtracting a sum of minimum transmission bandwidths allocated to the child station devices 60a, 60b and 60c, a sum of high priority packet transmission bandwidths allocated to the child station devices 60a, 60b and 60c and a sum of communication traffic informing packet transmission bandwidth allocated to the child station devices 60a, 60b and 60c from the whole upward transmission bandwidth of the transmission medium 24. The minimum transmission bandwidth, the high priority packet transmission bandwidth and the communication traffic informing packet transmission bandwidth for each child station device are, for example, determined according to a contract with the child station device. Thereafter, the surplus transmission bandwidth is initially shared among the child station devices 60a, 60b and 60c. In a start operation of the communication system, the surplus transmission bandwidth is, for example, equally shared among the child station devices 60a to 60c or is shared among the child station devices 60a to 60c in proportional to the minimum transmission bandwidth of each child station device.

Thereafter, in the bandwidth adding unit 74, the minimum transmission bandwidth, the high priority packet transmission bandwidth and the communication traffic informing packet transmission bandwidth of each child station device are added to a partial surplus transmission bandwidth given to the child station device in the surplus bandwidth sharing unit 73 to obtain an upward transmission bandwidth to be allocated to the child station device.

The bandwidth informing packet producing unit 35 and the packet multiplexing unit 36 are operated in the same manner as in the tenth embodiment.

In each of the child station devices 60a to 60c, the bandwidth allocation extracting unit 61 and the high priority packet producing unit 62 are operated in the same manner as in the tenth embodiment.

In the communication traffic informing packet producing unit 75, a type of communication traffic informing packet having information of a communication traffic of the valid information packets sent from the child station device is produced. Thereafter, in the packet multiplexing unit 76, the communication traffic informing packet produced in the communication traffic informing packet producing unit 75 is multiplexed with the high priority packet produced in the high priority packet producing unit 62. The communication traffic informing packet and the high priority packet multiplexed with each other are stored in the high priority buffer 77. Thereafter, the low priority operation and maintenance packet producing unit 64, the packet multiplexing unit 65, the low priority buffer 66 and the empty packet producing unit 67 are operated in the same manner as in the tenth embodiment.

Thereafter, in the reading-out control unit 78, the upward transmission bandwidth allocated to the child station device is received from the bandwidth allocation extracting unit 61, and an upward packet output time is repeatedly determined according to the upward transmission bandwidth. Thereafter, a communication traffic informing packet and a high priority packet multiplexed with each other are read out from the high priority buffer 77 and are preferentially sent to the parent station device 70 at the upward packet output time. In cases where no communication traffic informing packet or no high priority packet is stored in the high priority buffer 77 at the upward packet output time, the upward information packets multiplexed with the low priority operation and maintenance packets are read out from the low priority buffer 66, and each upward information packet or low priority operation and maintenance packet is sent to the parent station device 70 at the upward packet output time. Also, in cases where no communication traffic informing packet or no high priority packet is stored in the high priority buffer 77 at the upward packet output time and no upward information packets or no low priority packet is stored in the low priority buffer 66 at the upward packet output time, each empty packet produced in the empty packet producing unit 67 is sent to the parent station device 70 at the upward packet output time.

Therefore, the communication traffic informing packets multiplexed with the high priority packets, the upward information packets multiplexed with the low priority operation and maintenance packets and the empty packets are sent from the child station devices 60a to 60c to the parent station device 70 as an upward signal.

In the parent station device 70, when the upward packets having the communication traffic informing packets multiplexed with the high priority packets, the upward information packets multiplexed with the low priority operation and maintenance packets and the empty packets are received, it is judged in the packet type judging unit 71 whether each upward packet included in the upward signal is a type of communication traffic informing packet, a type of high priority packet, a type of upward information packet or low priority operation and maintenance packet or a type of empty packet.

Thereafter, in the packet number counting unit 72, the number of communication traffic informing packets and the number of high priority packets are counted for each child station device. Also, the number of upward information packets multiplexed with low priority operation and maintenance packets or the number of empty packets is counted for each child station device.

Thereafter, in the surplus bandwidth sharing unit 73, a surplus transmission bandwidth is calculated by subtracting a sum of minimum transmission bandwidths allocated to the child station devices 60a, 60b and 60c, a sum of high priority packet transmission bandwidths and a sum of communication traffic informing packet transmission bandwidths allocated to the child station devices 60a, 60b and 60c from the whole upward transmission bandwidth of the transmission medium 24, and the surplus transmission bandwidth is shared among the child station devices 60a, 60b and 60c according to the number of upward information packets multiplexed with low priority operation and maintenance packets or the number of empty packets counted in the packet number counting unit 72. Therefore, a partial surplus transmission bandwidth is given to each child station device.

Also, it is checked in the surplus bandwidth sharing unit 73 whether or not the number of high priority packets sent from each child station device matches the high priority packet transmission bandwidth initially allocated to the child station device, and it is checked in the surplus bandwidth sharing unit 73 whether or not the number of communication traffic informing packets sent from each child station device matches the communication traffic informing packet transmission bandwidth initially allocated to the child station device.

Thereafter, in the bandwidth adding unit 74, both the minimum transmission bandwidth, the high priority packet transmission bandwidth and the communication traffic informing packet transmission bandwidth of each child station device are added to the partial surplus transmission bandwidth given to the child station device in the surplus bandwidth sharing unit 73 to calculate an upward transmission bandwidth to be allocated to each child station device. In this case, the high priority packet transmission bandwidth of a fixed value and the communication traffic informing packet transmission bandwidth of a fixed value are initially allocated to each child station device. However, it is applicable that the high priority packet transmission bandwidth allocated to each child station device be adaptively determined according to the number of high priority packets counted in the packet number counting unit 72, and it is applicable that the communication traffic informing packet transmission bandwidth allocated to each child station device be adaptively determined according to the number of communication traffic informing packets counted in the packet number counting unit 72.

Thereafter, the parent station device 70 is operated in the same manner as in the tenth embodiment.

As is described above, in the eleventh embodiment, the communication traffic informing packet transmission bandwidth is included in the upward transmission bandwidth in the bandwidth adding unit 74 to send the communication traffic informing packets taking priority of the upward information packets multiplexed with the low priority operation and maintenance packets from each child station device to the parent station device 70, the high priority packet transmission bandwidth is included in the upward transmission bandwidth in the bandwidth adding unit 74 to send the high priority packets taking priority of the upward information packets multiplexed with the low priority operation and maintenance packets from each child station device to the parent station device 70. Therefore, the communication traffic informing packet transmission bandwidth for the sending of the communication traffic informing packets can be always guaranteed, and the high priority packet transmission bandwidth for the sending of the high priority packets can be always guaranteed. Accordingly, even though an upward transmission bandwidth control is performed to dynamically allocate an upward transmission bandwidth to each child station device, the communication traffic informing packets and the high priority packets can be reliably sent without any delay or failure in the sending of the communication traffic informing packets and the high priority packets.

Also, in the eleventh embodiment, the communication traffic informing packets and the high priority packets taking priority of the upward information packets multiplexed with the low priority operation and maintenance packets are preferentially output from each child station device to the parent station device 70 prior to the outputting of the upward information packets multiplexed with the low priority operation and maintenance packets. Accordingly, even though an upward transmission bandwidth control is performed to dynamically allocate an upward transmission bandwidth to each child station device, the communication traffic informing packets and the high priority packets can be reliably sent without any delay or failure in the sending of the communication traffic informing packets and the high priority packets.

In the first to eleventh embodiments, the number of child station devices is three. However, the number of child station devices is not limited to three, and it is applicable that a large number of each child station devices be arranged in the communication system.

## Claims

1. A communication control device functioning as a parent station device, which is connected with a plurality of child station devices through a single transmission medium and a multiplexing-demultiplexing unit, comprising:
a slot allocation information inserting unit for determining slot allocation information indicating the allocation of slots of an upward signal to each child station device and inserting the slot allocation information of the child station devices into a downward signal;
a slot allocation information storing unit for storing the slot allocation information determined in the slot allocation information inserting unit;
a packet checking unit for checking whether or not upward packets exists in slots of an upward signal and producing packet existence information;
a traffic estimating unit for detecting the existence of the upward packets in prescribed slots corresponding to the slot allocation information of each child station device stored in the slot allocation information storing unit according to the packet existence information produced by the packet checking unit and estimating a traffic volume of upward packets sent from the child station device in a future time according to the existence of the upward packets in the prescribed slots corresponding to the slot allocation information of the child station device; and
a slot allocation changing unit for changing the slot allocation information of the child station devices determined by the slot allocation information inserting unit according to the estimation of the traffic volume obtained in the traffic estimating unit.

2. A communication control device according to claim 1, wherein slots of the upward signal received after the passage of a known delay time from the insertion of the slot allocation information performed by the slot allocation information inserting unit is detected by the packet checking unit as the prescribed slots corresponding to the slot allocation information to detect the existence of the upward packets in the prescribed slots.

3. A communication control device according to claim 1 or 2, wherein the traffic volume of upward packets sent from each child station device in the future time is estimated by the packet checking unit according to the existence of the upward packets in the prescribed slots corresponding to the slot allocation information of the child station device and a traffic estimated result obtained in a past time.

4. A communication control device according to any of claims 1 to 3, wherein a periodic change of the traffic volume is estimated by the packet checking unit according to the existence of the upward packets in the prescribed slots corresponding to the slot allocation information of the child station device and a traffic estimated result obtained in a past time.

5. A communication control device according to any of claims 1 to 4, wherein slots corresponding to a minimum transmission bandwidth of each child station device is allocated to the child station device by the slot allocation changing unit, and a surplus transmission bandwidth is given to one child station device or is shared among the child station devices by the slot allocation changing unit according to the estimation of the traffic volume obtained in the traffic estimating unit.

6. A communication control device according to claim 5, wherein slots corresponding to a minimum transmission bandwidth of each child station device is allocated to the child station device in an initial allocation by the slot allocation changing unit.

7. A communication control device according to claim 5, wherein slots corresponding to a minimum transmission bandwidth of each child station device is allocated to the child station device in an initial allocation by the slot allocation changing unit, and a surplus transmission bandwidth is initially given to one child station device or is initially shared among the child station devices by the slot allocation changing unit at a prescribed proportion according to the estimation of the traffic volume obtained in the traffic estimating unit.

8. A communication control device according to claim 5, wherein specific slots of the upward signal are successively allocated to one child station device by the slot allocation changing unit until the estimation of the traffic volume in the child station device is obtained in the traffic estimating unit.

9. A communication system, comprising:
a communication control device functioning as a parent station device; and
a plurality of child station devices, which are connected with the communication control device through a single transmission medium and a multiplexing-demultiplexing unit, for respectively inserting upward packets in particular slots of an upward signal according to slot allocation information which indicates the allocation of the slots of the upward signal to the child station device and is inserted into a downward signal sent from the communication control device, wherein the communication control device comprises:
a slot allocation information inserting unit for determining the slot allocation information of each child station device and inserting the slot allocation information of the child station devices into the downward signal;
a slot allocation information storing unit for storing the slot allocation information determined in the slot allocation information inserting unit; a packet checking unit for checking whether or not the upward packets exists in slots of the upward signal and producing packet existence information;
a traffic estimating unit for detecting the existence of the upward packets in prescribed slots corresponding to the slot allocation information of each child station device stored in the slot allocation information storing unit according to the packet existence information produced by the packet checking unit and estimating a traffic volume of upward packets sent from the child station device in a future time according to the existence of the upward packets in the prescribed slots corresponding to the slot allocation information of the child station device; and
a slot allocation changing unit for changing the slot allocation information of the child station devices determined by the slot allocation information inserting unit according to the estimation of the traffic volume obtained in the traffic estimating unit.

10. A slot allocating method, in which slots of an upward signal is allocated among a plurality of child station devices by a communication control device functioning as a parent station device in a communication system in which the communication control device is connected with the child station devices through a single transmission medium and a multiplexing-demultiplexing unit, comprising the steps of:
determining the allocation of the slots among the child station devices;
inserting slot allocation information, which indicates the allocation of the slots of the upward signal to each child station device, into a downward signal;
storing the slot allocation information of the child station devices;
estimating a traffic volume of upward packets sent from each child station device in a future time according to the existence of the upward packets in prescribed slots corresponding to the slot allocation information of the child station device; and
changing the slot allocation information of the child station devices according to the estimation of the traffic volume in the child station devices.

11. A communication control device, which is connected with a plurality of child station devices through a single transmission medium and a multiplexing-demultiplexing unit to communicate with the child station devices, comprising:
an upward packet output permission instruction producing unit for producing an upward packet output permission instruction indicating the allocation of the usable slots of an upward signal for each child station device;
an identification information producing unit for producing identification information from both a transmission delay time between the communication control device and one child station device and the upward packet output permission instruction of the child station device produced by the upward packet output permission instruction producing unit for each child station device;
an upward packet output permission instruction sending unit for sending each upward packet output permission instruction produced by the upward packet output permission instruction producing unit to the corresponding child station device to allow each child station device output upward packets arranged in the usable slots;
a packet type judging unit for judging whether each of a plurality of upward packets sent from the child station devices in response to the upward packet output permission instructions produced by the upward packet output permission instruction producing unit is an upward information packet having valid information or an empty packet having invalid information;
an upward traffic measuring unit for identifying each child station device, from which a plurality of upward information packets and empty packets currently judged by the packet type judging unit are output, according to the identification information of the child station device produced by the identification information producing unit and measuring a traffic volume of the upward information packets output from each identified child station device according to packet type information obtained by the packet type judging unit;
an upward traffic estimating unit for estimating a traffic characteristic of the upward information packets output from each child station device according to the upward packet output permission instruction produced by the upward packet output permission instruction producing unit and the traffic volume measured by the upward traffic measuring unit; and
an upward bandwidth allocation determining unit for determining an upward transmission bandwidth allocated to each child station device according to the traffic characteristic estimated by the upward traffic estimating unit and changing the upward packet output permission instruction produced by the upward packet output permission instruction producing unit according to the upward transmission bandwidth for each child station device to make the identification information producing unit change the identification information according to the changed upward packet output permission instruction for each child station device and to make the upward packet output permission instruction sending unit send each changed upward packet output permission instruction to the corresponding child station device.

12. A communication control device according to claim 11, wherein a plurality of slots of the upward signal of the upward packets output from the child station devices are partitioned into a plurality of upward transmission bandwidth control frames by the upward bandwidth allocation determining unit so as to control the outputting of the upward packets from each child station device in response to the corresponding upward packet output permission instruction changed by the upward bandwidth allocation determining unit in each upward transmission bandwidth control frame, and the corresponding upward packet output permission instruction instructs the corresponding child station device to output a plurality of upward packets at equal intervals in each upward transmission bandwidth control frame.

13. A communication control device according to claim 11 or 12, wherein a plurality of slots of the upward signal of the upward packets output from the child station devices are partitioned into a plurality of upward transmission bandwidth control frames by the upward bandwidth allocation determining unit so as to control the outputting of the upward packets from each child station device in response to the corresponding upward packet output permission instruction changed by the upward bandwidth allocation determining unit in each upward transmission bandwidth control frame, and the corresponding upward packet output permission instruction instructs the corresponding child station device to output a plurality of upward packets at unequal intervals in each upward transmission bandwidth control frame.

14. A communication control device according to any of claims 11 to 13, wherein the traffic volume of the upward information packets output from each identified child station device is measured by the upward traffic measuring unit by measuring an upward information packet interval of each pair of upward information packets output from the identified child station device and the number of empty packets which are output from the identified child station device and are arranged between the pair of upward information packets, and the traffic characteristic is estimated by the upward traffic estimating unit according to the upward packet output permission instruction, information of the upward information packet intervals of the upward information packets and information of the number of empty packets.

15. A communication control device according to claim 12, wherein a length of each upward transmission bandwidth control frame obtained by the upward bandwidth allocation determining unit is changeable.

16. A communication control device according to claim 13, wherein a length of each upward transmission bandwidth control frame obtained by the upward bandwidth allocation determining unit is changeable.

17. A communication control device according to claims 13 to 16, wherein a transition frame is inserted into the upward transmission bandwidth control frames by the upward bandwidth allocation determining unit so as to smoothly change the upward transmission bandwidth allocated to one child station device in cases where the upward transmission bandwidth allocated to the child station device by the upward bandwidth allocation determining unit is changed.

18. A communication control device according to claims 13 to 17, wherein the traffic volume of the upward information packets output from each identified child station device is measured by the upward traffic measuring unit by measuring an upward information packet interval of each pair of upward information packets output from the identified child station device, an empty packet interval of each pair of empty packets output from the identified child station device and the number of empty packets which are output from the identified child station device and are arranged between the pair of upward information packets, and the traffic characteristic is estimated by the upward traffic estimating unit according to the upward packet output permission instruction, information of the upward information packet intervals of the upward information packets, information of the empty packet intervals of the empty packets and information of the number of empty packets.

19. A communication control method in a communication between a communication control device and a plurality of child station devices through a single transmission medium and a multiplexing-demultiplexing unit, comprising the steps of:
producing an upward packet output permission instruction indicating the allocation of the usable slots of an upward signal for each child station device;
producing identification information from both a transmission delay time between the communication control device and one child station device and the upward packet output permission instruction of the child station device for each child station device;
sending each upward packet output permission instruction to the corresponding child station device to allow each child station device output upward packets arranged in the usable slots;
judging whether each of a plurality of upward packets sent from the child station devices in response to the upward packet output permission instructions is an upward information packet having valid information or an empty packet having invalid information;
identifying each child station device, from which a plurality of upward information packets and empty packets currently judged are output, according to the identification information of the child station device;
measuring a traffic volume of the upward information packets output from each identified child station device according to packet type information obtained in the judging step;
estimating a traffic characteristic of the upward information packets output from each child station device according to both the upward packet output permission instruction and the traffic volume;
determining an upward transmission bandwidth allocated to each child station device according to the traffic characteristic; and
changing the upward packet output permission instruction according to the upward transmission bandwidth for each child station device to change the identification information according to the changed upward packet output permission instruction for each child station device and to send each changed upward packet output permission instruction to the corresponding child station device.

20. A communication control method according to claim 19, further comprising the steps of
partitioning a plurality of slots of the upward signal of the upward packets output from the child station devices into a plurality of upward transmission bandwidth control frames;
controlling the outputting of the upward packets from each child station device in response to the corresponding changed upward packet output permission instruction in each upward transmission bandwidth control frame; and
instructing the corresponding child station device according to the corresponding upward packet output permission instruction to output a plurality of upward packets at equal intervals in each upward transmission bandwidth control frame.

21. A communication control method according to claim 19 or 20, further comprising the steps of
partitioning a plurality of slots of the upward signal of the upward packets output from the child station devices into a plurality of upward transmission bandwidth control frames;
controlling the outputting of the upward packets from each child station device in response to the corresponding changed upward packet output permission instruction in each upward transmission bandwidth control frame; and
instructing the corresponding child station device according to the corresponding upward packet output permission instruction to output a plurality of upward packets at unequal intervals in each upward transmission bandwidth control frame.

22. A communication control method according to any of claims 19 to 21, wherein the step of measuring the traffic volume comprises the step of
measuring an upward information packet interval of each pair of upward information packets output from the identified child station device and the number of empty packets which are output from the identified child station device and are arranged between the pair of upward information packets, and the step of estimating the traffic characteristic comprises the step of
estimating the traffic characteristic according to the upward packet output permission instruction, information of the upward information packet intervals of the upward information packets and information of the number of empty packets.

23. A communication control method according to claim 21 or 22, further comprising the step of:
inserting a transition frame into the upward transmission bandwidth control frames so as to smoothly change the upward transmission bandwidth allocated to one child station device in cases where the upward transmission bandwidth allocated to the child station device is changed.

24. A communication control method according to any of claims 21 to 23, wherein the step of measuring the traffic volume comprises the step of
measuring an upward information packet interval of each pair of upward information packets output from the identified child station device, an empty packet interval of each pair of empty packets output from the identified child station device and the number of empty packets which are output from the identified child station device and are arranged between the pair of upward information packets, and
the step of estimating the traffic characteristic comprises the step of
estimating the traffic characteristic according to the upward packet output permission instruction, information of the upward information packet intervals of the upward information packets, information of the empty packet intervals of the empty packets and information of the number of empty packets.

25. A parent station device, which is connected with a plurality of child station devices through a single transmission medium and a multiplexing-demultiplexing unit to communicate with the child station devices by sharing a whole upward transmission bandwidth of the transmission medium, comprising:
a packet type judging unit for judging whether each of a plurality of upward packets sent from the child station devices is a high priority packet, a low priority packet or an empty packet;
a packet number counting unit for counting the number of high priority packets judged by the packet type judging unit for each child station device and counting the number of low priority packets or the number of empty packets judged by the packet type judging unit for each child station device;
a surplus bandwidth sharing unit for calculating a surplus transmission bandwidth by subtracting both a sum of minimum transmission bandwidths allocated to the child station devices and a sum of high priority packet transmission bandwidths allocated to the child station devices from the whole upward transmission bandwidth of the transmission medium, and sharing the surplus transmission bandwidth among the child station devices so as to give a partial surplus transmission bandwidth to each child station device according to the number of low priority packets or the number of empty packets counted by the packet number counting unit for the child station device;
a bandwidth adding unit for calculating an upward transmission bandwidth allocated to each child station device by adding the minimum transmission bandwidth allocated to the child station device and the high priority packet transmission bandwidth allocated to the child station device to the partial surplus transmission bandwidth of the child station device shared by the surplus bandwidth sharing unit;
a bandwidth informing packet producing unit for producing an upward transmission bandwidth informing packet having information of the upward transmission bandwidth of each child station device calculated by the bandwidth adding unit; and
a packet multiplexing unit for multiplexing the upward transmission bandwidth informing packets of the child station devices produced by the bandwidth informing packet producing unit with downward packets to send the upward transmission bandwidth informing packets multiplexed with the downward packets to the child station devices.

26. A parent station device according to claim 25, wherein each of the upward packets sent from the child station devices is judged by the packet type judging unit to be a communication traffic informing packet having information of a communication traffic of the upward packets, a high priority packet, a low priority packet or an empty packet,
the surplus transmission bandwidth is calculated by the surplus bandwidth sharing unit by subtracting the sum of the minimum transmission bandwidths allocated to the child station devices, the sum of the high priority packet transmission bandwidths allocated to the child station devices and a sum of communication traffic informing packet transmission bandwidths allocated to the child station devices from the whole upward transmission bandwidth of the transmission medium,
the partial surplus transmission bandwidth of the surplus transmission bandwidth is given to each child station device according to the number of low priority packets or the number of empty packets counted for the child station device by the packet number counting unit, and
the upward transmission bandwidth allocated to each child station device is calculated by the bandwidth adding unit by adding the minimum transmission bandwidth allocated to the child station device, the high priority packet transmission bandwidth allocated to the child station device and the communication traffic informing packet transmission bandwidth allocated to the child station device to the partial surplus transmission bandwidth of the child station device given by the surplus bandwidth sharing unit.

27. A child station device, which is connected with a parent station device through a single transmission medium and a multiplexing-demultiplexing unit to communicate with the parent station device by sharing a whole upward transmission bandwidth of the transmission medium with other station devices, comprising:
a bandwidth allocation extracting unit for detecting an upward transmission bandwidth informing packet directed to the child station device from downward packets sent from the parent station device and extracting an upward transmission bandwidth allocated to the child station device from the upward transmission bandwidth informing packet:
a high priority packet producing unit for producing a high priority packet;
a high priority buffer for storing the high priority packet produced by the high priority packet producing unit;
a low priority buffer for storing a low priority packet;
an empty packet producing unit for producing an empty packet in cases where neither the high priority packet nor the low priority packet is stored in the high priority buffer or the low priority buffer at an upward packet output time; and
a reading-out control unit for determining the upward packet output time of the child station device according to the upward transmission bandwidth extracted by the bandwidth allocation extracting unit, outputting the high priority packet of the high priority buffer at the upward packet output time in cases where the high priority packet is stored in the high priority buffer at the upward packet output time, outputting the low priority packet stored in the low priority buffer at the upward packet output time in cases where the high priority packet is not stored in the high priority buffer at the upward packet output time, and sending the empty packet produced by the empty packet producing unit at the upward packet output time in cases where neither the high priority packet nor the low priority packet is stored in the high priority buffer or the low priority buffer at the upward packet output time.

28. A child station device according to claim 27, further comprising:
a communication traffic informing packet producing unit for producing a communication traffic informing packet which has information of a communication traffic of the high priority packet and the low priority packet sent from the child station device to the parent station device; and
a packet multiplexing unit for multiplexing the communication traffic informing packet with the high priority packet produced by the high priority packet producing unit so as to store the communication traffic informing packet multiplexed with the high priority packet in the high priority buffer and to send the communication traffic informing packet multiplexed with the high priority packet to the parent station device.

29. A communication system, in which a parent station device is connected with a plurality of child station devices through a single transmission medium and a multiplexing-demultiplexing unit to communicate between the parent station device and the child station devices by sharing a whole upward transmission bandwidth of the transmission medium, wherein the parent station device comprises:
a packet type judging unit for judging whether each of a plurality of upward packets sent from the child station devices is a type of high priority packet, a type of low priority packet or a type of empty packet;
a packet number counting unit for counting the number of high priority packets judged by the packet type judging unit for each child station device and counting the number of low priority packets or the number of empty packets judged by the packet type judging unit for each child station device;
a surplus bandwidth sharing unit for calculating a surplus transmission bandwidth by subtracting both a sum of minimum transmission bandwidths allocated to the child station devices and a sum of high priority packet transmission bandwidths allocated to the child station devices from the whole upward transmission bandwidth of the transmission medium, and sharing the surplus transmission bandwidth among the child station devices so as to give a partial surplus transmission bandwidth to each child station device according to the number of low priority packets or the number of empty packets counted by the packet number counting unit for the child station device;
a bandwidth adding unit for calculating an upward transmission bandwidth allocated to each child station device by adding the minimum transmission bandwidth allocated to the child station device and the high priority packet transmission bandwidth allocated to the child station device to the partial surplus transmission bandwidth of the child station device shared by the surplus bandwidth sharing unit;
a bandwidth informing packet producing unit for producing an upward transmission bandwidth informing packet having information of the upward transmission bandwidth of each child station device calculated by the bandwidth adding unit; and
a packet multiplexing unit for multiplexing the upward transmission bandwidth informing packets of the child station devices produced by the bandwidth informing packet producing unit with downward packets to send the upward transmission bandwidth informing packets multiplexed with the downward packets to the child station devices as a downward signal, and each of the child station devices comprises:
a bandwidth allocation extracting unit for detecting the upward transmission bandwidth informing packet directed to the child station device from downward signal sent from the packet multiplexing unit of the parent station device and extracting the upward transmission bandwidth allocated to the child station device from the upward transmission bandwidth informing packet:
a high priority packet producing unit for producing a high priority packet;
a high priority buffer for storing the high priority packet produced by the high priority packet producing unit;
a low priority buffer for storing a low priority packet;
an empty packet producing unit for producing an empty packet in cases where neither the high priority packet nor the low priority packet is stored in the high priority buffer or the low priority buffer at an upward packet output time; and
a reading-out control unit for determining the upward packet output time of the child station device according to the upward transmission bandwidth extracted by the bandwidth allocation extracting unit, outputting the high priority packet of the high priority buffer at the upward packet output time as an upward packet in cases where the high priority packet is stored in the high priority buffer at the upward packet output time, outputting the low priority packet stored in the low priority buffer at the upward packet output time as an upward packet in cases where the high priority packet is not stored in the high priority buffer at the upward packet output time, and sending the empty packet produced by the empty packet producing unit at the upward packet output time as an upward packet in cases where neither the high priority packet nor the low priority packet is stored in the high priority buffer or the low priority buffer at the upward packet output time.

30. A communication system according to claim 29, wherein each of the child station devices further comprises:
a communication traffic informing packet producing unit for producing a communication traffic informing packet which has information of a communication traffic of the high priority packet and the low priority packet sent from the child station device to the parent station device; and
a packet multiplexing unit for multiplexing the communication traffic informing packet with the high priority packet produced by the high priority packet producing unit so as to store the communication traffic informing packet multiplexed with the high priority packet in the high priority buffer and to send the communication traffic informing packet multiplexed with the high priority packet to the parent station device,
each of the upward packets sent from the child station devices is judged by the packet type judging unit of the parent station device to be a type of communication traffic informing packet, a type of high priority packet, a type of low priority packet or a type of empty packet,
the surplus transmission bandwidth is calculated by the surplus bandwidth sharing unit of the parent station device by subtracting the sum of the minimum transmission bandwidths allocated to the child station devices, the sum of the high priority packet transmission bandwidths allocated to the child station devices and a sum of communication traffic informing packet transmission bandwidths allocated to the child station devices from the whole upward transmission bandwidth of the transmission medium,
the partial surplus transmission bandwidth of the surplus transmission bandwidth is given to each child station device according to the number of low priority packets or the number of empty packets counted for the child station device by the packet number counting unit of the parent station device, and
the upward transmission bandwidth allocated to each child station device is calculated by the bandwidth adding unit of the parent station device by adding the minimum transmission bandwidth allocated to the child station device, the high priority packet transmission bandwidth allocated to the child station device and the communication traffic informing packet transmission bandwidth allocated to the child station device to the partial surplus transmission bandwidth of the child station device given by the surplus bandwidth sharing unit of the parent station device.
